# EUROPEAN PATENT APPLICATION

(11) **EP 2 738 735 A1**
(43) Date of publication of application: **04.06.2014**
(21) Application number: 12817155.0
(22) Date of filing: 25.07.2012
(51) Int. Cl.: G06Q 50/10, B60L 3/00, B60L 11/18, G06Q 30/04, G06Q 30/06, G08G 1/09, G08G 1/0962, G08G 1/14, H01M 10/42, H02J 7/00

(54) **CHARGE INFRASTRUCTURE MANAGEMENT SYSTEM, CONTROL METHOD, AND PROGRAM**

(30) Priority: 26.07.2011 JP 2011163091
(71) Applicant: Mitsubishi Heavy Industries, Ltd., Tokyo 108-8215 (JP)
(72) Inventor: SHIBATA Yutaka, Tokyo 108-8215 (JP); HASEGAWA Rie, Tokyo 108-8215 (JP); ADACHI Tetsuya, Tokyo 108-8215 (JP); HATTORI Kaito, Tokyo 108-8215 (JP)
(74) Representative: Henkel, Breuer & Partner
(86) International application number: PCT/JP2012/068809
(87) International publication number: WO 2013/015306

(57) **Abstract**

This charge infrastructure management system (100) is provided with a charger control unit (119) to control the operation of a charger (210), in ac - cordance with a combination of the charger (210) and devices selected by a manager of a charge infrastructure (200) as devices to be set in the charge infrastructure (200), from a plurality of types of charge infrastructure devices comprising at least the charger (210) which can be selected as devices to be set in the charge infrastructure (200).

## Description

### Technical Field

The present invention relates to a charging infrastructure management system, a control method, and a program. Particularly, the present invention relates to a charging infrastructure management system that manages a charging infrastructure of electric vehicles, a control method of controlling the charging infrastructure management system, and a program for the charging infrastructure management system.

Priority is claimed on Japanese Patent Application No. 2011-163091, filed July 26, 2011, the content of which is incorporated herein by reference.

### Background Art

A garage is a primary charging location of an electric vehicle, but since the distance an electric vehicle can travel on one charge is limited, charging stands are necessary on the go. Various techniques related to a charging stand have been known (for example, see PTLS 1 to 3).

The technique described in PTL 1 provides a charger which is installed in charging stations in the streets, tourist spots, or the like. The technique described in PTL 1 provides a charger including a parking device in which the parking device installed in a parking lot is combined with a charging mechanism. More specifically, the charger described in PTL 1 detects connection between a power source and a battery via a charging cable. Then, the charger detects electric capacity of the battery of a vehicle connected via the charging cable. The charger displays a chargeable time corresponding to the detected capacity. The charger sets a charging time within the range of the displayed chargeable time. The charger differentiates and receives input money or performs a reading and recording operation on an inserted card. The charger calculates and displays a charging fee corresponding to the set charging time. The charger outputs a charging command signal in the set charging time when the received amount of money X and the calculated charging fee Y satisfy a condition of X≥Y. The charger charges the battery of the vehicle connected via the charging cable from the power source in accordance with the charging command signal.

The technique described in PTL 2 provides a power feeder that is installed in a common space of a mansion or the like and that is suitable for common use by multiple specific users. More specifically, the power feeder described in PTL 2 acquires user identification information for identifying a user. The power feeder transmits the acquired user identification information to authentication means. The power feeder releases power feeding restriction on the basis of the authentication result from the authentication means. The power feeder generates utilization information including an amount of power fed to predetermined electrical equipment.

The technique described in PTL 3 provides a power-feeding charging system for an electric vehicle that can charge a user of an electric vehicle having concluded a contract with a power feeding service provider with a utilization fee of the power feeder including a power rate corresponding to used power. More specifically, the power-feeding charging system described in PTL 3 specifies a power feeder and authenticates a user by access of a terminal to a power-feeding server. The power-feeding charging system turns on a power feeding switch of a power feeder to start a power feeding operation on the basis of a command from the power-feeding server after specifying a power feeder and authenticating a user. The power-feeding charging system transmits the amount of used power measured by a meter after the power feeding operation ends by turning off the power feeding switch to the power-feeding server. The power-feeding charging system calculates a utilization fee including a power rate corresponding to the used power and transmits the calculated utilization fee to the terminal. The power-feeding charging system charges the user through a utilization fee payment process.

### Citation List

### Patent Literature

[PTL 1] Japanese Unexamined Patent Application, First Publication No. H06-318288
[PTL 2] Japanese Unexamined Patent Application, First Publication No. 2010-213497
[PTL 3] Japanese Unexamined Patent Application, First Publication No. 2011-034500

### Summary of Invention

### Problem to be Solved by the Invention

As described above, the technique described in PTL 1 is designed for a charging stand used by unspecified users. Accordingly, when the technique described in PTL 1 is applied to a charging stand used by specified users, there may be various problems.

On the other hand, the techniques described in PTL 2 and PTL 3 are designed for a charging stand used by specified users. Accordingly, when the techniques described in PTL 2 and PTL 3 are applied to a charging stand used by unspecified users, various problems may occur.

### Means for Solving the Problem

According to a first aspect of the present invention, there is provided a charging infrastructure management system managing a charging infrastructure for an electric vehicle, including: a charger control unit configured to control a charger so as to change the behavior of the charger at the time of charging the electric vehicle depending on a pattern of operation of the charging infrastructure determined by a combination of the charger for charging the electric vehicle with various charging-infrastructure devices other than the charger.

The charging infrastructure management system may further include a member authenticating unit configured to authenticate a member on the basis of member data read by a member data reader when the charging infrastructure is under a pattern of operation in which the member data reader for reading the member data from a storage device storing member data of the charging infrastructure is included as the charging-infrastructure device, and the charger control unit may control an operation of the charger so as to start a charging operation after the member authenticating unit authenticates the member.

The charging infrastructure management system may further include a reservation confirming unit configured to confirm whether the member authenticated by the member authenticating unit has reserved the charger, and the charger control unit may control the operation of the charger so as to start the charging operation when the reservation confirming unit confirms that the member has reserved the charger.

The charging infrastructure management system may further include: a charger specifying unit configured to specify a charger to be used by a member authenticated by the member authenticating unit out of a plurality of the chargers; and an entry regulating device control unit configured to control the operation of an entry regulating device so as to deregulate the entry of the electric vehicle into the parking space having the charger, which is specified by the charger specifying unit when the charging infrastructure is under a pattern of operation in which the entry regulating device for regulating entry of an electric vehicle into a parking space having the charger installed therein is included as the charging-infrastructure device.

The charger specifying unit may specify a charger to be used by the member when the reservation confirming unit confirms that the member has reserved the charger.

The charger specifying unit may specify a charger to be used by the member when the reservation confirming unit confirms that the member has not reserved the charger.

The charging infrastructure management system may further include a useful on-arrival data transmitting unit configured to transmit the useful on-arrival data including information useful on arrival at the charging infrastructure to an onboard device of the electric vehicle via a wireless transmitter when the charging infrastructure is under a pattern of operation in which the wireless transmitter for transmitting data to the onboard device in a wireless manner is included as the charging-infrastructure device.

The useful on-arrival data transmitting unit may transmit the useful on-arrival data including information indicating guidance to the charger specified by the charger specifying unit as the information useful on arrival at the charging infrastructure to the onboard device via the wireless transmitter.

The useful on-arrival data transmitting unit may transmit the useful on-arrival data including information advertising a business relevant to the charging infrastructure as the information useful on arrival at the charging infrastructure to the onboard device via the wireless transmitter.

The charging infrastructure management system may further include a useful before-arrival data transmitting unit configured to transmit the useful before-arrival data including information useful before arrival at the charging infrastructure to an onboard device of the electric vehicle via a communication network.

The useful before-arrival data transmitting unit may transmit the useful before-arrival data including information indicating the location of the charging infrastructure as the information useful before arrival at the charging infrastructure to the onboard device of the electric vehicle via the communication network.

The useful before-arrival data transmitting unit may transmit the useful before-arrival data including information indicating the utilization status of the charger as the information useful before arrival at the charging infrastructure to the onboard device of the electric vehicle via the communication network.

The useful before-arrival data transmitting unit may transmit before-arrival useful data including information indicating the reservation status of the charger as the information useful before arrival at the charging infrastructure to the onboard device of the electric vehicle via the communication network.

The charging infrastructure management system may further include a reachable charging infrastructure specifying unit configured to specifies a charging infrastructure reachable by the electric vehicle out of a plurality of the charging infrastructures on the basis of position information of the electric vehicle, information regarding the remaining charging capacity of a rechargeable battery of the electric vehicle, and position information regarding the plurality of charging infrastructures, and the useful before-arrival data transmitting unit may transmit the useful before-arrival data including information indicating the location of the charging infrastructure indicated by the reachable charging infrastructure specifying unit as the information useful before arrival at the charging infrastructure to the onboard device of the electric vehicle via the communication network.

The charging infrastructure management system may further include a utilization fee calculating unit configured to calculate a utilization fee of the charging infrastructure including at least a charging fee when the charging infrastructure is under a pattern of operation in which an automatic fee settlement machine for settling the utilization fee of the charging infrastructure is included as the charging-infrastructure device and when the automatic fee settlement machine in addition to the charger is selected as the charging-infrastructure devices. In this case, the charger control unit may control the operation of the charger so as to separate a power supply interface connected to the electric vehicle after the utilization fee calculated by the utilization fee calculating unit is settled by the automatic fee settlement machine.

The utilization fee calculating unit may calculate the utilization fee of the charging infrastructure further including a parking fee depending on a parking time in the charging infrastructure.

The utilization fee calculating unit may calculate the utilization fee depending on a time zone.

The charging infrastructure management system may further include an electronic payment processing unit configured to make electronic payment of the utilization fee calculated by the utilization fee calculating unit when a member authenticated by the member authenticating unit registers electronic payment in advance, and the charger control unit may control the operation of the charger so as to separate a power supply interface connected to the electric vehicle after the electronic payment is made by the electronic payment processing unit.

The charging infrastructure management system may further include a useful management data transmitting unit configured to transmit the useful management data including information useful for management of the charging infrastructure to a manager device used by a manager of the charging infrastructure via a communication network.

The useful management data transmitting unit may transmit the useful management data including information indicating a utilization status of the charging infrastructure as the information useful for management of the charging infrastructure to the manager device via the communication network.

The useful management data transmitting unit may transmit the useful management data including information indicating an operation status of the charging-infrastructure device as the information useful for management of the charging infrastructure to the manager device via the communication network.

The useful management data transmitting unit may transmit the useful management data including information indicating sales of the charging infrastructure as the information useful for management of the charging infrastructure to the manager device via the communication network.

The useful management data transmitting unit may transmit the useful management data including information indicating power consumption of the charging infrastructure as the information useful for management of the charging infrastructure to the manager device via the communication network.

The charging infrastructure management system may further include a charger setting receiving unit configured to receive a setting for the operation of the charger from the manager of the charging infrastructure.

The charger setting receiving unit may receive a setting on whether the charger should be made to operate from the manager of the charging infrastructure.

The charger setting receiving unit may receive a setting on whether the charger should be made to operate for the exclusive use of members from the manager of the charging infrastructure.

The charger setting receiving unit may receive a setting on whether the charger should be made to operate for the exclusive use of members who has reserved the charger from the manager of the charging infrastructure.

According to a second aspect of the present invention, there is provided a control method of controlling a charging infrastructure management system managing a charging infrastructure for an electric vehicle, including: a charger control step of controlling a charger so as to change the behavior of the charger at the time of charging the electric vehicle depending on a pattern of operation of the charging infrastructure determined by a combination of the charger for charging the electric vehicle with various charging-infrastructure devices other than the charger.

According to a third aspect of the present invention, there is provided a program for a charging infrastructure management system managing a charging infrastructure for an electric vehicle, causing the charging infrastructure management system to serve as a charger control unit configured to control a charger so as to change the behavior of the charger at the time of charging the electric vehicle depending on a pattern of operation of the charging infrastructure determined by a combination of the charger for charging the electric vehicle with various charging-infrastructure devices other than the charger.

The above-mentioned summary of the present invention includes all necessary features of the present invention and the present invention may include sub-combinations of the feature groups.

### Effects of the Invention

As can be seen from the above description, according to the present invention, it is possible to manage a charging infrastructure having various patterns of operation provided with various charging-infrastructure devices in addition to a charger for charging an electric vehicle. For example, the charging infrastructure according to the present invention can be managed regardless of a charging infrastructure used by specified users or a charging infrastructure used by unspecified users.

### Brief Description of Drawings

FIG. 1 is a diagram illustrating an example of a utilization environment of a charging infrastructure management system 100 according to an embodiment.
FIG. 2 is a diagram illustrating an example of a configuration of a charging infrastructure 200.
FIG. 3 is a diagram illustrating another example of the configuration of the charging infrastructure 200.
FIG. 4 is a diagram illustrating still another example of the configuration of the charging infrastructure 200.
FIG. 5 is a diagram illustrating still another example of the configuration of the charging infrastructure 200.
FIG. 6 is a diagram illustrating an example of a block configuration of a device controller 110.
FIG. 7 is a diagram illustrating an example of information stored in a unit price information storage unit 127 in the form of a matrix.
FIG. 8 is a diagram illustrating an example of information stored in a member information storage unit 128 in the form of a table.
FIG. 9 is a diagram illustrating an example of information stored in a charger information storage unit 129 in the form of a table.
FIG. 10 is a diagram illustrating an example of information stored in a management information storage unit 130 in the form of a table.
FIG. 11 is a diagram illustrating an example of a block configuration of a system management server 150.
FIG. 12 is a diagram illustrating an example of information stored in a member information storage unit 161 in the form of a table.
FIG. 13 is a diagram illustrating an example of information stored in a charging infrastructure information storage unit 162 in the form of a table.
FIG. 14 is a diagram illustrating an example of an operation sequence of the device controller 110 and the system management server 150.
FIG. 15 is a diagram illustrating another example of the operation sequence of the device controller 110 and the system management server 150.
FIG. 16 is a diagram illustrating an example of an operation flow of the system management server 150.
FIG. 17 is a diagram illustrating an example of an operation flow of the device controller 110.
FIG. 18 is a diagram illustrating another example of the operation flow of the device controller 110.
FIG. 19 is a diagram illustrating still another example of the operation flow of the device controller 110.
FIG. 20 is a diagram illustrating still another example of the operation sequence of the device controller 110 and the system management server 150.
FIG. 21 is a diagram illustrating still another example of the operation flow of the device controller 110.
FIG. 22 is a diagram illustrating an example of a hardware configuration when the device controller 110 and the system management server 150 are constructed as an electronic information processor such as a computer.

### Description of Embodiments

Hereinafter, the present invention will be described in conjunction with embodiments thereof. The following embodiments do not limit the invention described in the appended claims and all combinations of features described in the embodiments cannot be said to be essential for the solution of the present invention.

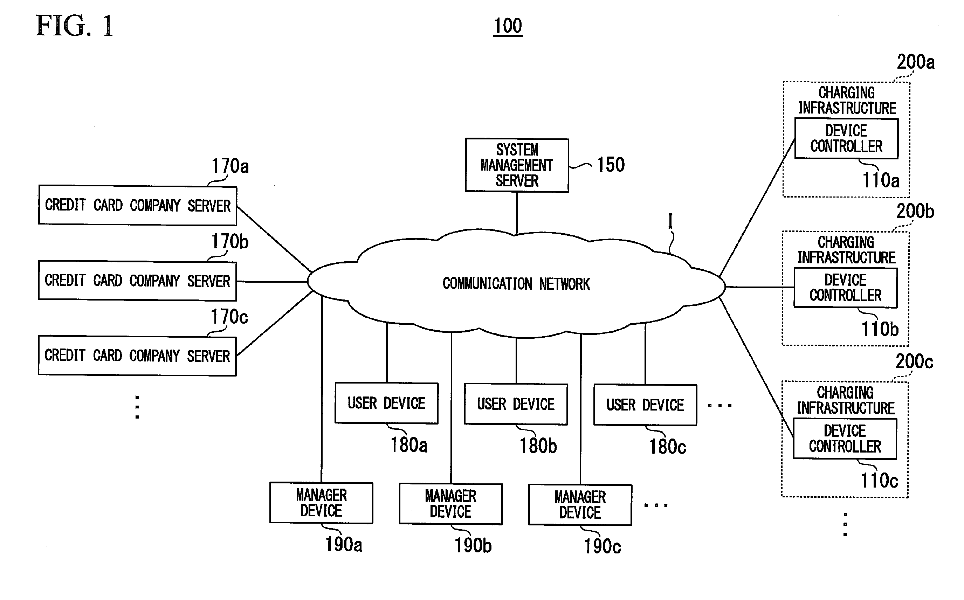

FIG. 1 is a diagram illustrating an example of a utilization environment of a charging infrastructure management system 100 according to an embodiment. The charging infrastructure management system 100 is a system for managing charging infrastructures 200a, 200b, 200c, ... (hereinafter, collectively referred to as charging infrastructures 200) for electric vehicles. Here, the charging infrastructure 200 is equipment provided with chargers for charging an electric vehicle. Various patterns of operation can be considered as the configuration of the charging infrastructure 200. A combination of various charging-infrastructure devices disposed in the charging infrastructure 200 varies depending on the pattern of operation of the charging infrastructure 200. In this case, a charger control method varies depending on the combination of the charging-infrastructure devices employed. The charging infrastructure management system 100 operates to employ different control methods depending on the combinations of devices selected as the charging-infrastructure devices to be employed from among various charging-infrastructure devices by a manager.

The charging infrastructure management system 100 includes device controllers 110a, 110b, 110c, ... (hereinafter, collectively referred to as device controllers 110) and a system management server 150. The system management server 150 is connected to the device controllers 110, credit company servers 170a, 170b, 170c, ... (hereinafter, collectively referred to as credit card company servers 170), and user devices 180a, 180b, 180c, ... (hereinafter, collectively referred to as user devices 180) via a communication network I. A device controller 110 disposed in each charging infrastructure 200 is connected to a manager device 190 of the manager of the corresponding charging infrastructure 200 from among manager devices 190a, 190b, 190c, ... (hereinafter, collectively referred to as manager devices 190) via a communication network I. Here, the communication network I includes a computer network such as the Internet, core networks of communication service providers, and various local networks.

The device controllers 110 control operations of various devices disposed in the charging infrastructures 200. The device controllers 110 are disposed in the corresponding charging infrastructures 200. Each device controller 110 controls operations of various devices disposed in the corresponding charging infrastructure 200.

The system management server 150 manages information necessary for operation of the charging infrastructure management system 100. The system management server 150 manages information on the charging infrastructures 200 subscribed in the charging infrastructure management system 100 and information on multiple users of electric vehicles using the charging infrastructure management system 100.

The credit company servers 170 are electronic payment servers operated by credit card companies. Each credit company server 170 receives electronic payment of a utilization fee when a member of the corresponding credit card company utilizes the charging infrastructures 200. Here, electronic payment means paying a price of goods or services by electronically interchanging data without using cash.

The user devices 180 are used by the users of electronic vehicles utilizing the charging infrastructure management system 100. The user devices 180 include portable information terminals such as a mobile phone and PDAs (Personal Digital Assistants), PCs, and DSRC (Dedicated Short Range Communication) onboard devices.

The manager devices 190 are used by managers of the charging infrastructures 200. The manager devices 190 include portable information terminals such as mobile phones and PDAs and PCs.

In this embodiment, a configuration in which the charging infrastructure management system 100 includes a single system management server 150 will be described in order to prevent complicated explanation. However, the charging infrastructure management system 100 may include multiple system management servers 150.

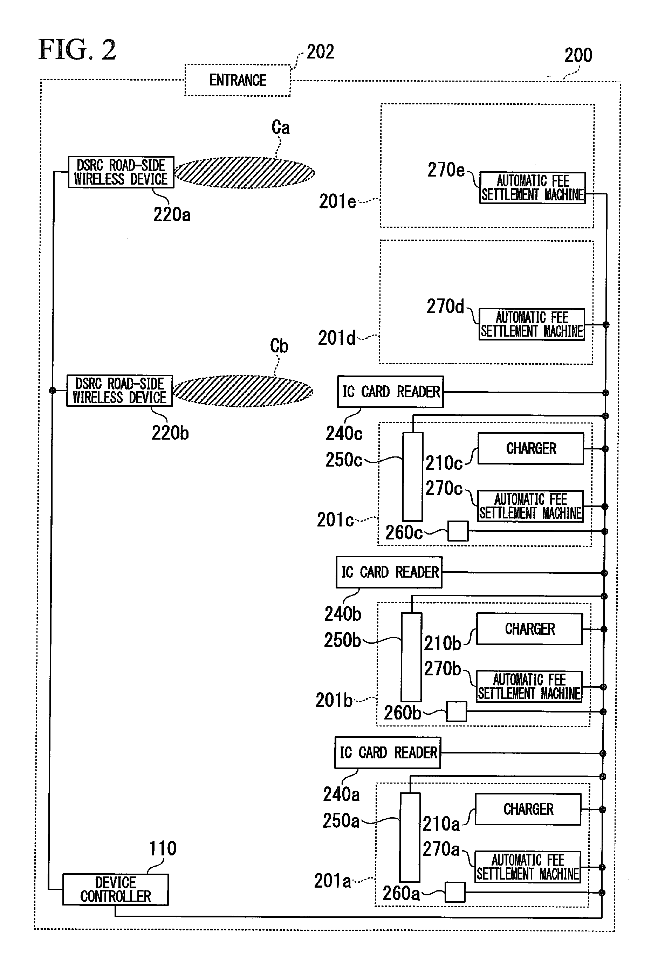

FIG. 2 is a diagram illustrating a configuration of a charging infrastructure 200. The charging infrastructure 200 shows an example where some parking spaces 201a to 201c in a parking lot having parking spaces 201a to 20 1 e (hereinafter, collectively referred to as parking spaces 201) such as a parking lot of a department store are used as parking spaces 201 for charging an electric vehicle. Here, the parking spaces 201 for charging an electric vehicle are operated for the exclusive use of members who have been registered in advance to use the charging infrastructures 200, are operated for the exclusive use of members who have reserved the utilization thereof out of the members, or are operated for use of unspecified users. The manager of the charging infrastructure 200 can set the operation method to be employed for each parking space 201.

The charging infrastructures 200 in this example are provided with a device controller 110, chargers 210a to 210c (hereinafter, collectively referred to as chargers 210), two DSRC road-side wireless devices 220a and 220b (hereinafter, collectively referred to as DSRC road-side wireless devices 220), IC (Integrated Circuit) card readers 240a to 240c (hereinafter, collectively referred to as IC card readers 240), flap plates 250a to 250c (hereinafter, collectively referred to as flap plates 250), sensors 260a to 260c (hereinafter, collectively referred to as sensors 260), and automatic fee settlement machines 270a to 270e (hereinafter, collectively referred to as automatic fee settlement machines 270). The device controller 110 is electrically connected to the chargers 210, the DSRC road-side wireless devices 220, the IC card readers 240, the flap plates 250, the sensors 260, and the automatic fee settlement machines 270. The DSRC road-side wireless devices 220 are an example of the "wireless transmitter" in the present invention. The IC card readers 240 are an example of the "member data reader" in the present invention. The flap plates 250 are an example of the "entry regulating device" in the present invention. The sensors 260 are an example of the "detector" in the present invention.

The chargers 210 supply power to an electric vehicle via a power supply interface. The chargers 210 are disposed in the parking spaces 201a to 201 c, respectively, allocated as the parking spaces 201 for charging an electric vehicle out of the parking spaces 201a to 201 e. When a control signal indicating that a supply of power is allowed is received from the device controller 110, the chargers 210 are changed to a state in which power can be supplied to an electric vehicle. When the power supply interface is connected to an electric vehicle, the chargers 210 lock the power supply interface to the electric vehicle so as not to separate the power supply interface from the electric vehicle. When data indicating a request for notifying an amount of power supplied to the electric vehicle is received from the device controller 110, the chargers 210 transmit data indicating the amount of power supplied to the electric vehicle to the device controller 110. When a control signal indicating that unlocking of the power supply interface is allowed is received from the device controller 110, the chargers 210 unlocks the power supply interface from the electric vehicle.

The DSRC road-side wireless devices 220 transmit and receive data to and from a DSRC onboard device of an electric vehicle by DSRC. The DSRC road-side wireless device 220a is disposed in the vicinity of an entrance 202 of the charging infrastructure 200. The DSRC road-side wireless device 220a normally transmits data including information for guidance of the charging infrastructure 200 into a communication area Ca by DSRC. Here, examples of the information for guidance of the charging infrastructure 200 include locations or availability status of the charging spaces 201a to 201 c, a welcome message for entry to the charging infrastructure 200, and advertisement of commercial facilities of department stores installed together with the charging infrastructure 200.

On the other hand, the DSRC road-side wireless device 220b is disposed in the vicinity of the charging spaces 201a to 201c. The DSRC road-side wireless device 220b normally transmits data into a communication area Cb by DSRC. When data is received from a DSRC onboard device of an electric vehicle, the DSRC road-side wireless device 220b transmits data indicating a request for transmitting a member ID (Identifier) and a password into the communication area Cb by DSRC. When data indicating the member ID and the password is received from a DSRC onboard device of an electric vehicle by DSRC within a predetermined time after transmitting the data, the DSRC road-side wireless device 220b transmits the received data to the device controller 110. When data including information for guidance to the location of the parking space 201 to be used is received from the device controller 110, the DSRC road-side wireless device 220b transmits the received data into the communication area Cb by DSRC. The data indicating a member ID and a password is an example of the "member data" in the present invention.

The IC card readers 240 read data stored in an IC card. The IC card readers 240 are disposed in the vicinity of the parking spaces 201 a to 20 1 c provided with the chargers 210. When the data stored in the IC card is read, the IC card readers 240 transmit the read data to the device controller 110.

The flap plates 250 regulate entry of a vehicle into the parking spaces 201. The flap plates 250 are embedded in the ground surface in the parking spaces 201 a to 201 c provided with the chargers 210. The flap plates 250 regulate entry of a vehicle into the parking spaces 201 in a state where the flap plates stand up from the ground surface. A flap plate 250 disposed in the parking space 201 for the exclusive use of members or for the exclusive use of members who have reserved the chargers stands up from the ground surface when no vehicle is parked in the corresponding parking space 201. When a control signal indicating that deregulation of the entry is allowed is received from the device controller 110, the flap plate 250 falls to the vicinity of the ground surface. Then, when a control signal indicating that the regulation of the entry is allowed is received from the device controller 110, the flap plate 250 stands up from the ground surface. On the other hand, the flap plate 250 disposed in the parking space 201 which can be used by unspecified users is normally in a fallen state.

The sensors 260 detect a vehicle. The sensors 260 are disposed in the parking spaces 201a to 201 c, provide with the chargers 210. When a vehicle in the corresponding parking space 201 is detected, the sensors 260 transmit a detection signal indicating that a vehicle is detected to the device controller 110.

The automatic fee settlement machines 270 settle the utilization fee of the charging infrastructure 200. The automatic fee settlement machines 270 are disposed in the parking spaces 201. The automatic fee settlement machines 270 each includes a payment start switch for starting payment of the utilization fee of the charging infrastructure 200 and an input port into which money is input. When the payment start switch is pressed, the automatic fee settlement machines 270 transmit data indicating a request for settlement to the device controller 110. When data indicating the utilization fee of the charging infrastructure 200 is received from the device controller 110, the automatic fee settlement machines 270 waits until the same amount of money as the utilization fee is input from the input port. When the same amount of money as the utilization fee is input from the input port, the automatic fee settlement machines 270 transmit data indicating that the money is input to the device controller 110.

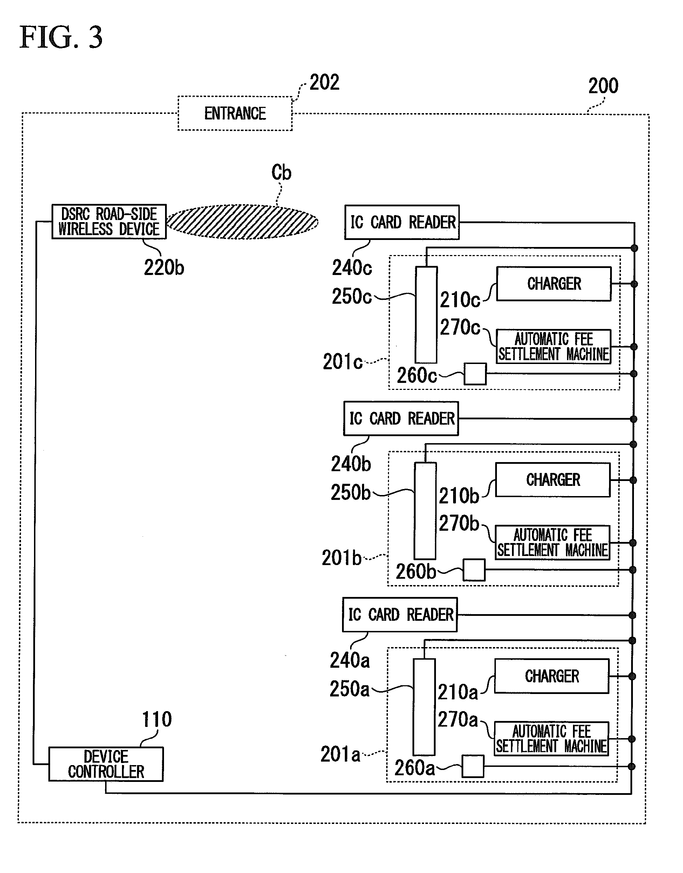

FIG. 3 is a diagram illustrating another example of the configuration of a charging infrastructure 200. The charging infrastructure 200 uses parking spaces 201a to 201 c of a toll parking lot such as a coin-operated parking lot as the parking spaces 201 for charging an electric vehicle.

The charging infrastructure 200 is provided with a device controller 110, chargers 210a to 210c, a DSRC road-side wireless device 220b, IC card readers 240a to 240c, flap plates 250a to 250c, sensors 260a to 260c, and automatic fee settlement machines 270a to 270c. The functions and operations of the constituents are the same as the functions and operations of the corresponding constituents in the charging infrastructure 200 in the example illustrated in FIG. 2 and thus description thereof is omitted.

In the toll parking lot such as a coin-operated parking lot, since the number of parking spaces 201 is smaller than that in a parking lot of a department store, all the parking spaces 201 are used as the parking spaces 201 for charging an electric vehicle. Therefore, the charging infrastructure 200 of this example skips the DSRC road-side wireless device 220a which is a device necessary for guidance of the charging infrastructure 200, in comparison with the charging infrastructure 200 in the example illustrated in FIG. 2.

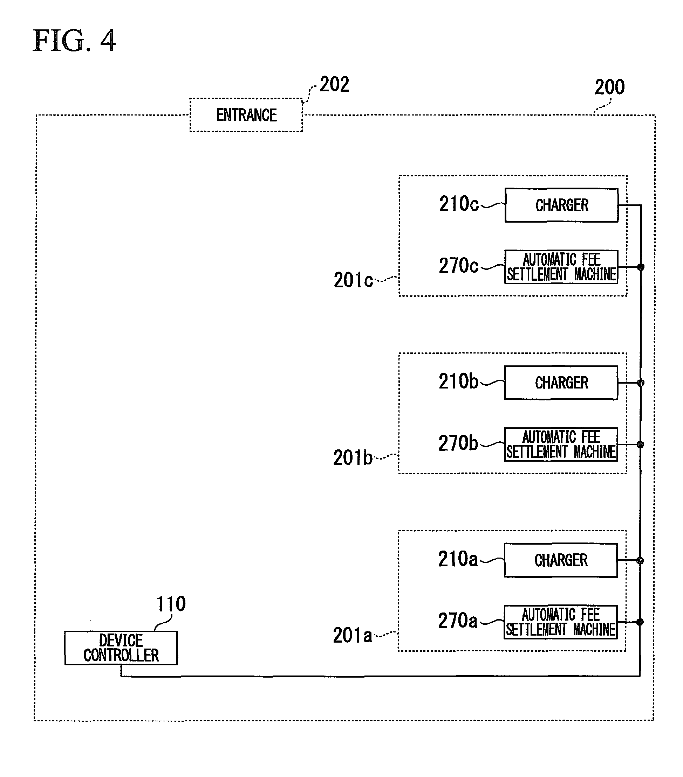

FIG. 4 is a diagram illustrating another example of the configuration of a charging infrastructure 200. The charging infrastructure 200 uses parking spaces 201 of a parking lot of a convenience store as the parking spaces 201 for charging an electric vehicle. The charging infrastructure 200 may be applied to charging stands disposed in gasoline stands.

The charging infrastructure 200 is provided with a device controller 110, chargers 210a to 210c, and automatic fee settlement machines 270a to 270c. The functions and operations of the constituents are the same as the functions and operations of the corresponding constituents in the charging infrastructure 200 in the example illustrated in FIG. 2 and thus description thereof is omitted.

The parking lot of a convenience store or the charging stands disposed in gasoline stands do not often employ the operation in which they can be utilized by only specified members or members who have reserved the chargers. Therefore, the charging infrastructure 200 of this example further skip the DSRC road-side wireless device 220b, the IC card readers 240, the flap plates 250, and the sensors 260 which are devices necessary for use of only specified members or members who have reserved the chargers, in comparison with the charging infrastructure 200 in the example illustrated in FIG. 3.

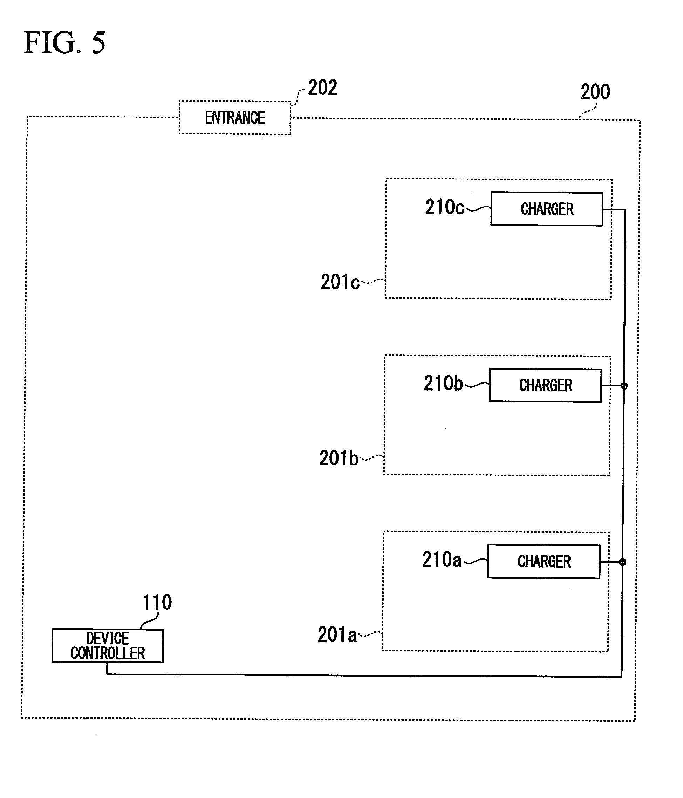

FIG. 5 is a diagram illustrating still another example of the configuration of a charging infrastructure 200. The charging infrastructure 200 of this example uses parking spaces 201 of a parking lot of a taxi company or a parking lot for car sharing as the parking spaces 201 for charging an electric vehicle.

The charging infrastructure 200 of this example is provided with a device controller 110 and chargers 210a to 210c. The functions and operations of the constituents are the same as the functions and operations of the corresponding constituents in the charging infrastructure 200 in the example illustrated in FIG. 2 and thus description thereof is omitted.

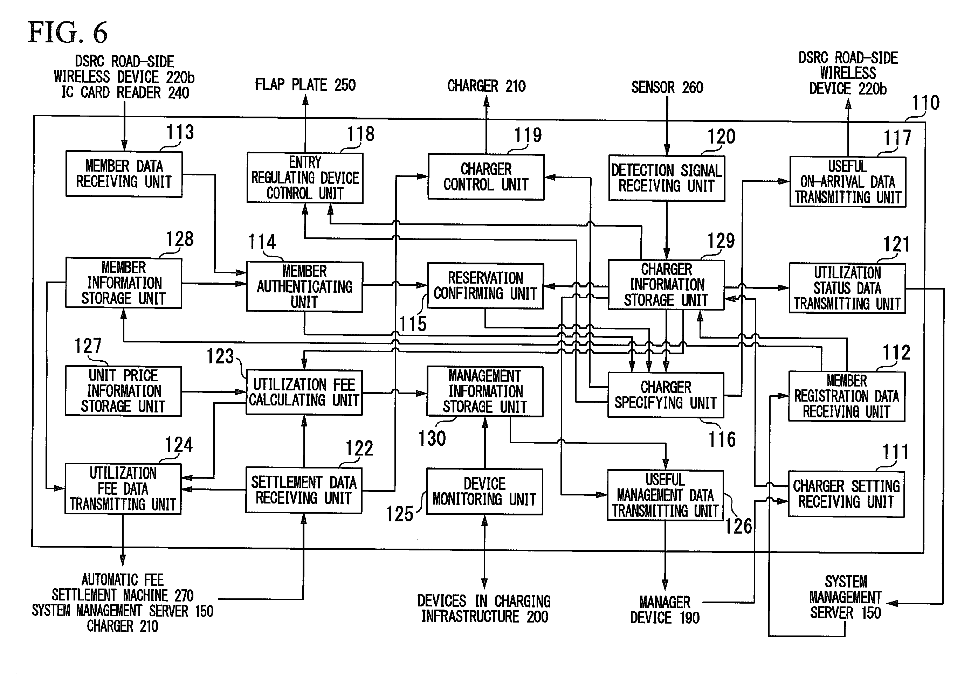

FIG. 6 is a diagram illustrating an example of a block configuration of a device controller 110. The device controller 110 includes a charger setting receiving unit 111, a member registration data receiving unit 112, a member data receiving unit 113, a member authenticating unit 114, a reservation confirming unit 115, a charger specifying unit 116, a useful on-arrival data transmitting unit 117, an entry regulating device control unit 118, a charger control unit 119, a detection signal receiving unit 120, a utilization status data transmitting unit 121, a settlement data receiving unit 122, a utilization fee calculating unit 123, a utilization fee data transmitting unit 124, a device monitoring unit 125, a useful management data transmitting unit 126, a unit price information storage unit 127, a member information storage unit 128, a charger information storage unit 129, and a management information storage unit 130. The functions and operations of the constituents will be described below.

The charger setting receiving unit 111 receives a setting relevant to the operations of the chargers 210 from the manager of the charging infrastructure 200. The charger setting receiving unit 111 receives a setting on whether to operate the chargers 210 from the manager of the charging infrastructure 200. The charger setting receiving unit 111 receives a setting on whether to operate the chargers 210 for the exclusive use of members from the manager of the charging infrastructure 200. The charger setting receiving unit 111 receives a setting on whether to operate the chargers 210 for the exclusive use of members who have reserved the chargers from the manager of the charging infrastructure 200.

The member registration data receiving unit 112 receives data indicating registration information of members from the system management server 150.

The member data receiving unit 113 receives data indicating a member ID and a password recorded in a DSRC onboard device from the DSRC road-side wireless device 220b. The member data receiving unit 113 receives data indicating a member ID and a password recorded on an IC card from the IC card readers 240.

The member authenticating unit 114 authenticates a member on the basis of the data indicating a member ID and a password, which is read by the IC card readers 240, when the charging infrastructure is under a pattern of operation in which the IC card readers 240 are included as the charging-infrastructure devices. The member authenticating unit 114 authenticates a member on the basis of the data indicating a member ID and a password, which is received from the DSRC onboard device by the DSRC road-side wireless device 220b, when the DSRC road-side wireless device 220b in addition to the chargers 210 is selected as the charging-infrastructure devices.

The reservation confirming unit 115 confirms whether the member authenticated by the member authenticating unit 114 has reserved the charger 210.

The charger specifying unit 116 specifies a charger 210 to be used by the member authenticated by the member authenticating unit 114 from among the chargers 210. The charger specifying unit 116 specifies a charger to be used by a member when the reservation confirming unit 115 confirms that the member has reserved the chargers 210. The charger specifying unit 116 specifies a charger 210 to be used by a member when the reservation confirming unit 115 confirms that the member did not reserve the chargers 210.

The useful on-arrival data transmitting unit 117 transmits useful on-arrival data including information useful on arrival at the charging infrastructure 200 to the DSRC onboard device via the DSRC road-side wireless device 220a or the DSRC road-side wireless device 220b when the charging infrastructure is under a pattern of operation in which the DSRC road-side wireless devices 220 are included as the charging-infrastructure devices. More specifically, the useful on-arrival data transmitting unit 117 transmits useful on-arrival data including information for guidance to the charger identified by the charger specifying unit 116 as the information useful on arrival at the charging infrastructure 200 to the DSRC onboard device via the DSRC road-side wireless device 220b. The on-arrival useful data transmitting unit 117 transmits on-arrival useful data including information indicating advertisements of a relevant business of the charging infrastructure 200 as the information useful on arrival at the charging infrastructure 200 to the DSRC onboard device via the DSRC road-side wireless device 220a.

The entry regulating device control unit 118 controls the operation of the flap plate 250 so as to deregulate the entry of an electric vehicle into the parking space 201 provided with the charger specified by the charger specifying unit 116 when the charging infrastructure is under a pattern of operation in which the flap plates 250 are included as the charging-infrastructure devices.

The charger control unit 119 controls behavior of the chargers 210 at charging an electric vehicle to vary depending on the pattern of operation of the charging infrastructure determined by the combination of the chargers 210 for charging an electric vehicle with various charging-infrastructure devices other than the chargers 210. More specifically, the charger control unit 119 controls the operation of the charger 210 so as to start a charging operation after the member authenticating unit 114 authenticates a member. When the reservation confirming unit 115 confirms that the member has reserved the charger 210, the charger control unit 119 controls the operation of the charger 210 so as to start the charging operation. When the automatic fee settlement machines 270 in addition to the chargers 210 are selected as the charging-infrastructure devices, the charger control unit 119 controls the operation of the charger 210 so as to separate the power supply interface connected to an electric vehicle after the utilization fee of the charging infrastructure 200 including at least a charging fee is settled by the automatic fee settlement machine 270. The charger control unit 119 controls the operation of the charger 210 so as to separate the power supply interface connected to the electric vehicle after the system management server 150 performs an electronic payment process. The charger control unit 119 transmits data indicating a request for transmitting an amount of power supplied to the electric vehicle to the charger 210.

The detection signal receiving unit 120 receives a signal indicating that a vehicle is detected from the sensor 260.

The utilization status data transmitting unit 121 transmits data indicating a utilization status of the charger 210 to the system management server 150.

The settlement data receiving unit 122 receives data indicating a request for settling the utilization fee of the charging infrastructure 200 from the automatic fee settlement machine 270. The settlement data receiving unit 122 receives data indicating that the utilization fee of the charging infrastructure 200 is settled from the automatic fee settlement machine 270. The settlement data receiving unit 122 receives data indicating that the utilization fee of the charging infrastructure 200 is settled from the system management server 150. The settlement data receiving unit 122 receives data indicating an amount of power supplied to the electric vehicle from the charger 210.

The utilization fee calculating unit 123 calculates a utilization fee of the charging infrastructure 200 including at least a charging fee when the charging infrastructure is under a pattern of operation in which the automatic fee settlement machines 270 are included as the charging-infrastructure devices. More specifically, the utilization fee calculating unit 123 calculates a utilization fee of the charging infrastructure 200 further including a parking fee depending on a parking time in the charging infrastructure 200. The utilization fee calculating unit 123 calculates a utilization fee depending on a time zone.

The utilization fee data transmitting unit 124 transmits data indicating the utilization fee to the automatic fee settlement machine 270. The utilization fee data transmitting unit 124 transmits the data indicating the utilization fee to the system management server 150.

The device monitoring unit 125 monitors the operation states of the devices disposed in the charging infrastructure 200.

The useful management data transmitting unit 126 transmits useful management data including information useful for management of the charging infrastructure 200 to the manager device 190 via the communication network I. Examples of the information useful for management of the charging infrastructure 200 included in the useful management data include information indicating a utilization status of the charging infrastructure, the operation statuses of the charging-infrastructure devices, or the sales of the charging infrastructure 200 and information indicating an amount of power consumption of the charging infrastructure 200.

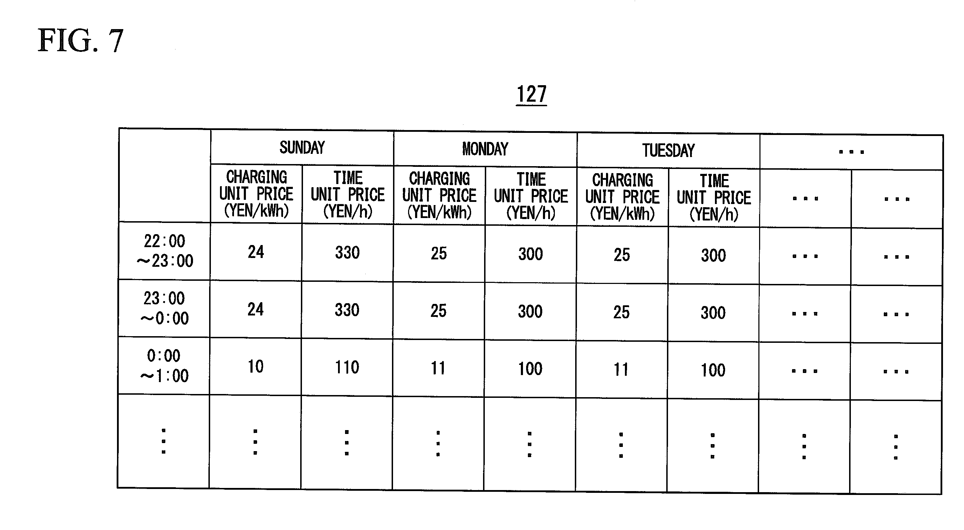

FIG. 7 is a diagram illustrating an example of information stored in the unit price information storage unit 127 in the form of a matrix. The unit price information storage unit 127 stores information of a charging unit price (yen/kWh) and a time unit price (yen/h) corresponding to each day of the week and each time zone. Each day of the week and each time zone are an example of the "time zone" in the present invention.

The charging unit price (yen/kWh) is the fee per unit power. The time unit price (yen/h) is the fee per unit time for using a parking lot P.

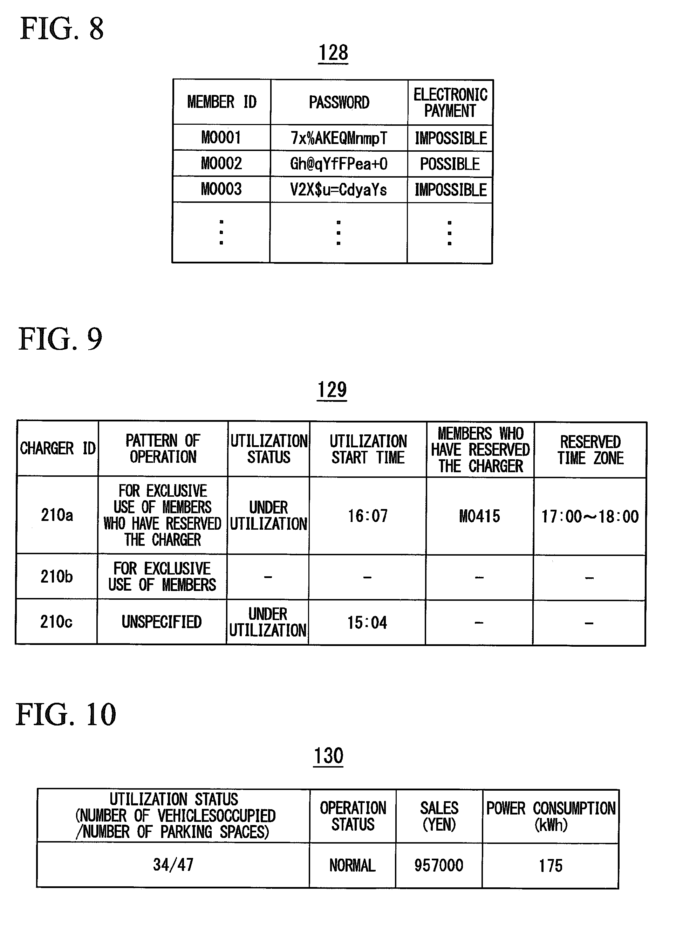

FIG. 8 is a diagram illustrating an example of information stored in the member information storage unit 128 in the form of a table. The member information storage unit 128 stores information of a member ID, a password, and electronic payment in correlation with each other.

The member ID is an identification code allocated for each person for identifying members of the charging infrastructure 200. The password is a secret character string used to confirm the member identified by the member ID. The electronic payment is information indicating whether the member identified by the member ID can make electronic payment.

FIG. 9 is a diagram illustrating an example of information stored in the charger information storage unit 129 in the form of a table. The charger information storage unit 129 stores information of a charger ID, a pattern of operation, a utilization status, a utilization start time, members who have reserved the charger, and a reserved time zone in correlation with each other.

The charger ID is an identification code allocated for each charger for identifying chargers 210 of the charging infrastructure 200. The pattern of operation is information indicating whether the charger 210 identified by the charger ID is operated for the exclusive use of member who has reserved the charger, for the exclusive use of members, or for use of unspecified users and is stopped in operation. The utilization status is information indicating whether the charger 210 identified by the charger ID is being utilized. The utilization start time is information indicating a time at which utilization of the parking space provided with the charger 210 identified by the charger ID is started. The member who has reserved the charger is a member ID of a member reserving the charger 210 identified by the charger ID. The reserved time zone is information indicating a time zone in which the charger 210 identified by the charger ID is reserved.

FIG. 10 is a diagram illustrating an example of information stored in the management information storage unit 130 in the form of a table. The management information storage unit 130 stores information of a utilization status (the number of vehicles/the number of parking spaces), an operation status, sales (yen), and power consumption (kWh).

The utilization status (the number of vehicles/the number of parking spaces) is information indicating the number of parking spaces 201 which are being currently used from among the parking spaces 201 of the charging infrastructure 200. The operation status is information indicating whether the devices installed in the charging infrastructure 200 are normally operated. The sales (yen) are information indicating sales of this month of the charging infrastructure 200. The power consumption (kWh) is information indicating the power consumption of this month of the charging infrastructure 200.

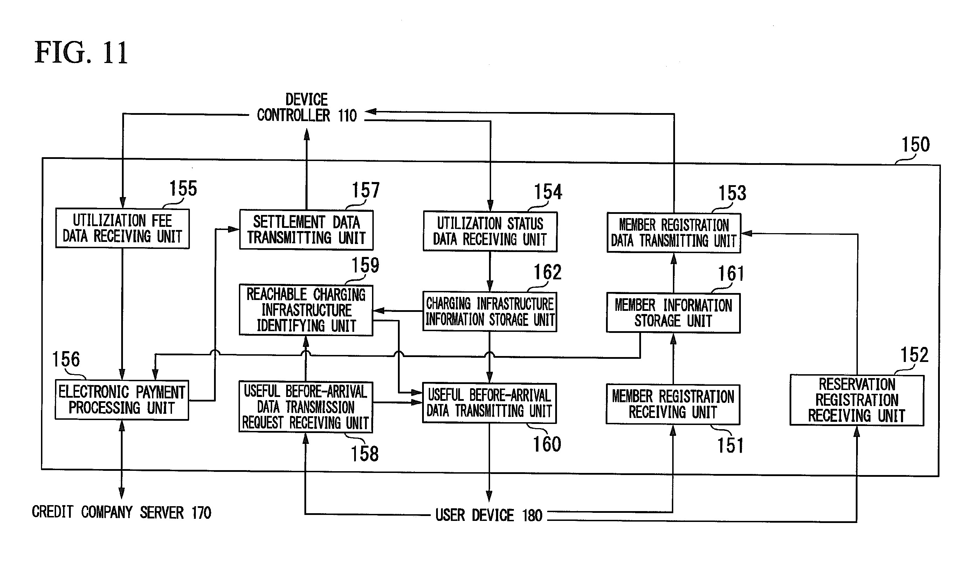

FIG. 11 is a diagram illustrating an example of a block configuration of the system management server 150. The system management server 150 includes a member registration receiving unit 151, a reservation registration receiving unit 152, a member registration data transmitting unit 153, a utilization status data receiving unit 154, a utilization fee data receiving unit 155, an electronic payment processing unit 156, a settlement data transmitting unit 157, a useful before-arrival data transmission request receiving unit 158, a reachable charging infrastructure specifying unit 159, a useful before-arrival data transmitting unit 160, a member information storage unit 161, and a charging infrastructure information storage unit 162. The functions and operations of the constituents will be described below.

The member registration receiving unit 151 receives member registration for utilizing the chargers 210 of the charging infrastructure 200.

The reservation registration receiving unit 152 receives reservation for utilizing the chargers 210 of the charging infrastructure 200.

The member registration data transmitting unit 153 transmits data indicating registration information of members to the device controller 110.

The utilization status data receiving unit 154 receives data indicating the utilization status of the chargers 210 from the device controller 110.

The utilization fee data receiving unit 155 receives data indicating a utilization fee from the device controller 110.

The electronic payment processing unit 156 makes electronic payment of the utilization fee calculated by the device controller 110 when the member identified by the device controller 110 registers electronic payment in advance.

The settlement data transmitting unit 157 transmits data indicating that the utilization fee of the charging infrastructure 200 is settled to the device controller 110.

The useful before-arrival data transmission request receiving unit 158 receives a request for transmitting useful before-arrival data including information useful before arrival at the charging infrastructure 200.

The reachable charging infrastructure specifying unit 159 specifies a charging infrastructure 200 which an electric vehicle can reach from among charging infrastructures 200 on the basis of position information of the electric vehicle, information of remaining charging capacity of a rechargeable battery of the electric vehicle, and position information of the charging infrastructures 200.

The useful before-arrival data transmitting unit 160 transmits before-arrival useful data including the information useful before arrival at the charging infrastructure 200 to the DSRC onboard device of the electric vehicle via the communication network I. More specifically, the useful before-arrival data transmitting unit 160 transmits useful before-arrival data including information indicating the location of the charging infrastructure 200 as the information useful before arrival at the charging infrastructure 200 to the DSRC onboard device of the electric vehicle via the communication network I. The useful before-arrival data transmitting unit 160 transmits useful before-arrival data including information indicating the utilization status of the charger 210 as the information useful before arrival at the charging infrastructure 200 to the DSRC onboard device of the electric vehicle via the communication network I. The useful before-arrival data transmitting unit 160 transmits useful before-arrival data including information indicating the reservation status of the charger 210 as the information useful before arrival at the charging infrastructure 200 to the DSRC onboard device of the electric vehicle via the communication network I. The useful before-arrival data transmitting unit 160 transmits useful before-arrival data including information indicating the location of the charging infrastructure 200 identified by the reachable charging infrastructure specifying unit 159 as the information useful before arrival at the charging infrastructure 200 to the DSRC onboard device of the electric vehicle via the communication network I.

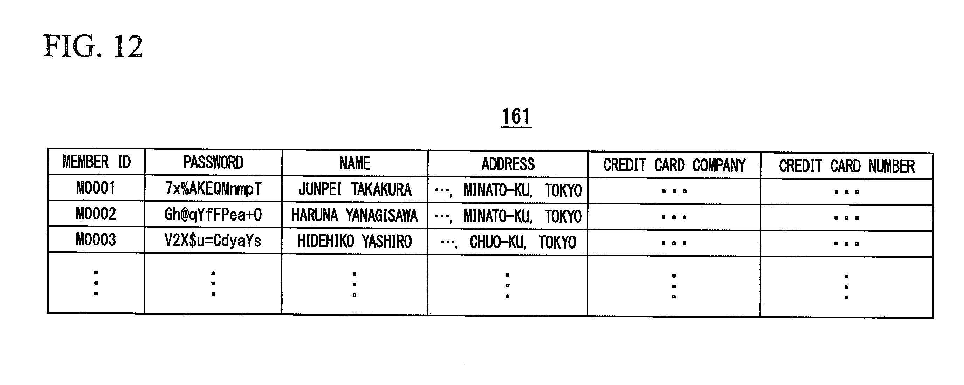

FIG. 12 is a diagram illustrating an example of information stored in the member information storage unit 161 in the form of a table. The member information storage unit 161 stores information of a member ID, a password, a name, an address, a credit card company, and a credit card number in correlation with each other.

The member ID is an identification code allocated for each person for identifying members of the charging infrastructure 200. The password is a secret character string used to confirm the member identified by the member ID. The name is a name of the member identified by the member ID. The address is a location in where the member identified by the member ID lives. The credit card company is a credit card company with which the member identified by the member ID has concluded a contract. The credit card number is a number of the credit card used by the member identified by the member ID.

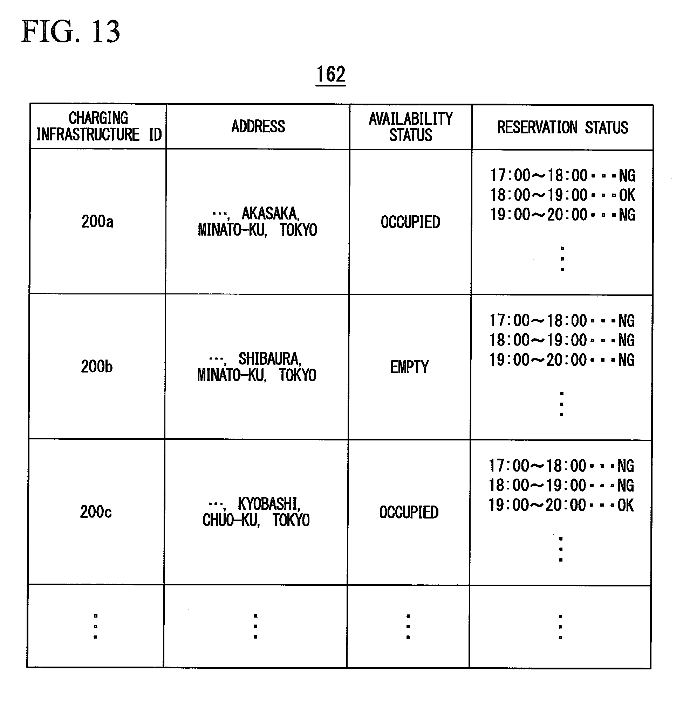

FIG. 13 is a diagram illustrating an example of information stored in the charging infrastructure information storage unit 162 in the form of a table. The charging infrastructure information storage unit 162 stores information of a charging infrastructure ID, an address, an availability status, and a reservation status in correlation with each other.

The charging infrastructure ID is an identification code allocated for identifying the charging infrastructure 200. The address is a location of the charging infrastructure 200 identified by the charging infrastructure ID. The availability status is information indicating whether the charging infrastructure 200 identified by the charging infrastructure ID has an empty space or not. The reservation status is a reservation status of the chargers 210 disposed in the charging infrastructure 200 identified by the charging infrastructure ID.

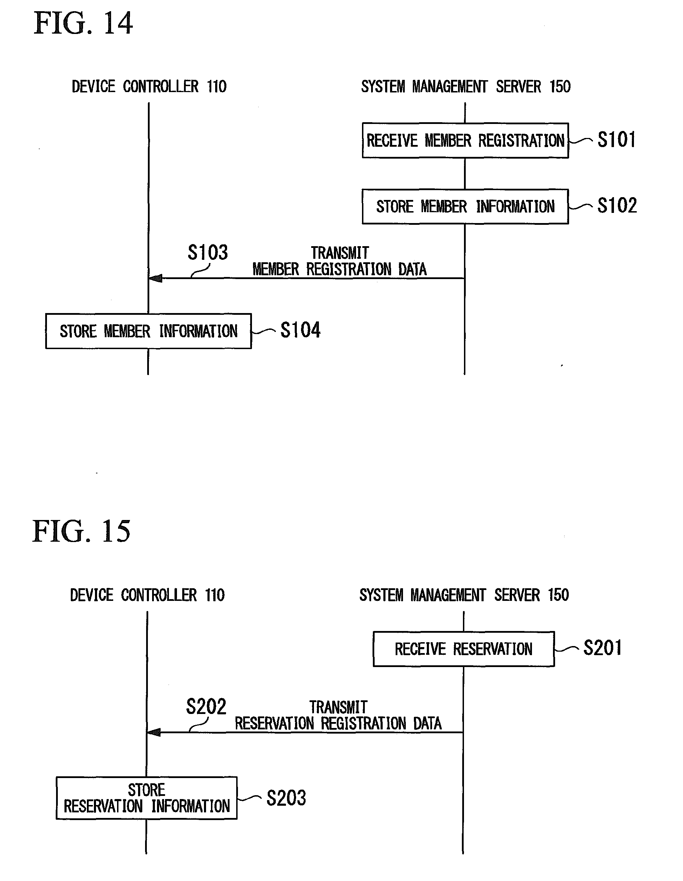

FIG. 14 is a diagram illustrating an example of an operation sequence of the device controller 110 and the system management server 150. The operation sequence shows an operation sequence of receiving member registration for utilizing the charging infrastructure 200. Here, the operation sequence will be described below with additional reference to FIGS. 1 to 13.

A user driving an electric vehicle performs member registration in the charging infrastructure management system 100 through a web site for member registration using a user device 180 such as a PC or a mobile phone, when the user intends to use a member-exclusive service such as to reserve a charger 210 or to acquire useful information before arrival at the charging infrastructure 200 in utilizing the charging infrastructure 200. At this time, the user performing member registration registers various information such as a name, an address, a credit card company, and a credit card number. When the member registration for utilizing the chargers 210 of the charging infrastructure 200 is received (S101), the member registration receiving unit 151 of the system management server 150 stores the information in the member information storage unit 161 in correlation with each other (S102). At this time, a member ID and a password are issued to the newly-registered member and are stored in the member information storage unit 161 in correlation with the registered information. In this way, the information illustrated in FIG. 12 is stored in the member information storage unit 161 of the system management server 150.

When information of a new member is stored in the member information storage unit 161, the member registration data transmitting unit 153 of the system management server 150 transmits data indicating the information such as the member ID, the password, and the electronic payment of the member to the device controller 110 (S103). When the data transmitted from the system management server 150 in this way is received, the member registration data receiving unit 112 of the device controller 110 stores the information indicated by the received data in the member information storage unit 128 (S104). In this way, the information illustrated in FIG. 8 is stored in the member information storage unit 128 of the device controller 110.

On the other hand, the provider of the charging infrastructure management system 100 sends, for example, an IC card having the issued member ID and password recorded thereon to the registered address by mail. The member receiving the IC card makes a DSRC onboard device read the member ID and the password recorded on the IC card, when the member has the DSRC onboard device. In this way, the member ID and the password for utilizing the charging infrastructure 200 are recorded on the DSRC onboard device.

The processes of steps S103 and S104 are not carried out when the chargers 210 for the exclusive use of members are not provided.

FIG. 15 is a diagram illustrating another example of the operation sequence of the device controller 110 and the system management server 150. The operation sequence shows an operation sequence of receiving reservation for utilizing the charging infrastructure 200. Here, the operation sequence will be described below with additional reference to FIGS. 1 to 14.

When a member of the charging infrastructure 200 intends to reserve the chargers 210, the member reserves the chargers 210 through a web site for reservation using the user device 180. At this time, the member registers information such as the charging infrastructure 200 to be reserved and a reservation time zone. When the reservation registration is received (S201), the reservation registration receiving unit 152 of the system management server 150 transmits data including the registered information to the member registration data transmitting unit 153.

When the data indicating the registered information is received from the reservation registration receiving unit 152, the member registration data transmitting unit 153 reads the member ID and the password of the member having reserved the utilization from the member information storage unit 161. The member registration data transmitting unit 153 transmits data indicating the information of the reserved time zone and the information indicating the member ID and the password read from the member information storage unit 161 from among the information included in the data received from the reservation registration receiving unit 152 to the device controller 110 of the charging infrastructure 200 to be used by the member and included in the data received from the reservation registration receiving unit 152 (S202). When the data transmitted from the system management server 150 in this way is received, the member registration data receiving unit 112 of the device controller 110 stores the information of the member ID of the member who has reserved the charger and the reserved time zone indicated by the received data corresponding to the information of the chargers 210 which is under a pattern of operation for exclusive use of members who have reserved the chargers from among the information stored in the charger information storage unit 129 (S203). In this way, the information of the member who has reserved the charger and the reserved time zone illustrated in FIG. 9 are stored in the charger information storage unit 129.

The processes of steps S201 to S203 are not carried out when the chargers 210 for the exclusive use of members who have reserved the chargers are not provided.

In this embodiment, the operation sequence of transmitting data relevant to reservation from the system management server 150 to the device controller 110 when receiving reservation from a user has been described, but other operation sequences may be employed. For example, as another embodiment, it is possible to employ an operation sequence of making the system management server 150 store reservation information when receiving reservation from a user and making the device controllers 110 inquire the system management server 150 of presence of reservation information in a predetermined time.

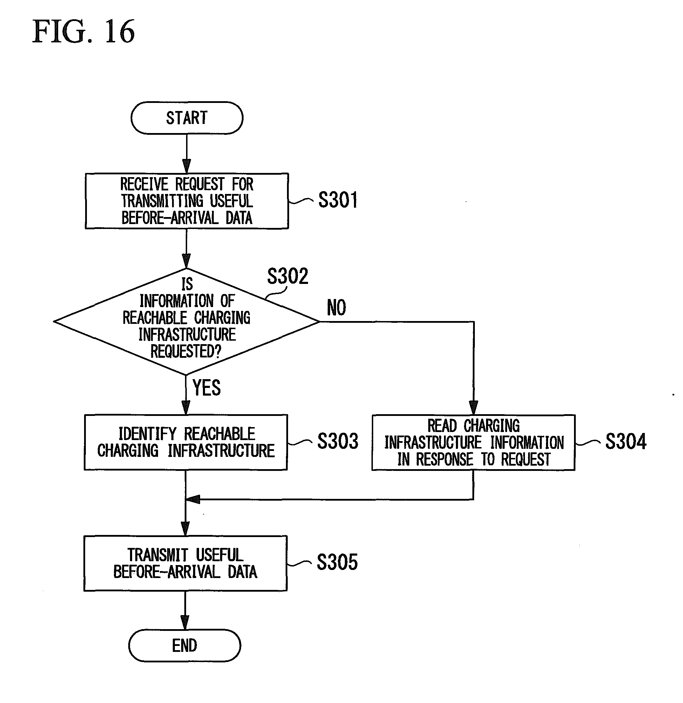

FIG. 16 is a diagram illustrating an example of an operation flow of the system management server 150. This operation flow shows an operation flow of transmitting data including information useful before arrival at the charging infrastructure 200 to a member of the charging infrastructure 200. This operation sequence will be described below with additional reference to FIGS. 1 to 15.

When a member of the charging infrastructure 200 intends to acquire information useful before arrival at the charging infrastructure 200, the member accesses a web site for acquiring information useful before arrival at the charging infrastructure 200, for example, by operating a touch screen connected to the DSRC onboard device. The member requests to transmit useful information, for example, by selecting desired useful information from a choice menu in the web site. Examples of the useful information include locations of charging infrastructures 200, utilization statuses of chargers 210, reservation statuses of the chargers 210, and locations of the charging infrastructures 200 which can be reached with current remaining charging capacity of a rechargeable battery. The DSRC onboard device transmits all vehicle data indicating the current position of the electric vehicle and the remaining charging capacity of the rechargeable battery, when a request for transmitting information of the locations of the charging infrastructures 200 which can be reached with the remaining charging capacity of the rechargeable battery is selected. In this way, the useful before-arrival data transmission request receiving unit 158 of the system management server 150 receives the request for transmitting useful before-arrival data (S301).

When the request for transmitting the information of the locations of the charging infrastructures 200 is received (NO in S302), the useful before-arrival data transmission request receiving unit 158 reads information of the addresses of the charging infrastructures 200 from the charging infrastructure information storage unit 162 (S304). The useful before-arrival data transmitting unit 160 transmits data indicating the read information of the addresses of the charging infrastructures 200 to the DSRC onboard device having transmitted the request (S305).

When the request for transmitting the information of the utilization statuses of the chargers 210 is received (NO in S302), the useful before-arrival data transmission request receiving unit 158 reads information of the availability statuses of the charging infrastructures 200 from the charging infrastructure information storage unit 162 (S304). The useful before-arrival data transmitting unit 160 transmits data indicating the read information of the availability statuses of the charging infrastructures 200 to the DSRC onboard device having transmitted the request (S305).

When the request for transmitting the information of the reservation statuses of the chargers 210 is received (NO in S302), the before-arrival useful data transmission request receiving unit 158 reads information of the reservation statuses of the chargers 210 of the charging infrastructures 200 from the charging infrastructure information storage unit 162 (S304). The useful before-arrival data transmitting unit 160 transmits data indicating the read information of the reservation statuses of the chargers 210 of the charging infrastructures 200 to the DSRC onboard device having transmitted the request (S305).

When the request for transmitting the locations of the charging infrastructures 200 which can be reached with the current remaining charging capacity of the rechargeable battery is received (YES in S302), the useful before-arrival data transmission request receiving unit 158 sends the vehicle data received from the DSRC onboard device to the reachable charging infrastructure specifying unit 159. When the vehicle data is received from the DSRC onboard device, the reachable charging infrastructure specifying unit 159 of the system management server 150 reads the information of the addresses of the charging infrastructures 200 from the charging infrastructure information storage unit 162. The reachable charging infrastructure specifying unit 159 specifies a charging infrastructure 200 which can be reached with the remaining charging capacity of the rechargeable battery of the electric vehicle from among the charging infrastructures 200 on the basis of the read addresses of the charging infrastructures 200, the current position of the electric vehicle indicated by the vehicle data, and the remaining charging capacity of the rechargeable battery (S303). The reachable charging infrastructure specifying unit 159 sends data indicating the information of the address of the specified charging infrastructure 200 to the useful before-arrival data transmitting unit 160. The useful before-arrival data transmitting unit 160 transmits the data received from the reachable charging infrastructure specifying unit to the DSRC onboard device having transmitted the request (S305).

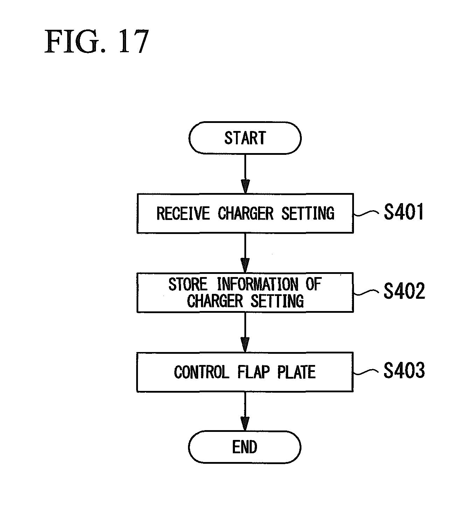

FIG. 17 is a diagram illustrating an example of an operation flow of the device controller 110. This operation flow shows an operation flow of receiving a setting of a pattern of operation of a charger 210. This operation flow will be described below with additional reference to FIGS. 1 to 16.

A manager of a charging infrastructure 200 can change the pattern of operation of a charger 210. For example, the manager can operate a charger 210 or can stop the operation thereof. The manager can operate a charger 210 for the exclusive use of members or for use of unspecified users. The manager may operate a charger 210 for the exclusive use of members who have reserved the charger. In the settings, the manager requests to change settings of the pattern of operation of a charger 210 through a web site for changing settings of patterns of operation of chargers 210 using the manager device 190. When the setting of the charger requested in this way is received (S401), the charger setting receiving unit 111 of the device controller 110 stores the setting information in the charger information storage unit 129 (S402). In this way, the information of the patterns of operation illustrated in FIG 9 is stored in the charger information storage unit 129 of the device controller 110.

When the pattern of operation of the charger 210 is changed, the entry regulating device control unit 118 of the device controller 110 controls the standing or falling of the flap plate 250 in a state where no vehicle is parked in the parking space 201 depending on the pattern of operation (S403). For example, when the pattern of operation of the charger 210 is set to operation stop, exclusive use of members, or exclusive use of members who have reserved the charger, the entry regulating device control unit 118 controls the flap plate 250 so as to be in a standing state when no vehicle is parked in the parking space 201. When the pattern of operation of the charger 210 is set to the use of unspecified users, the entry regulating device control unit 118 controls the flap plate 250 so as to be in a fallen state when no vehicle is parked in the parking space 201.

The process of step S403 is not carried out when the flap plate 250 is not provided.

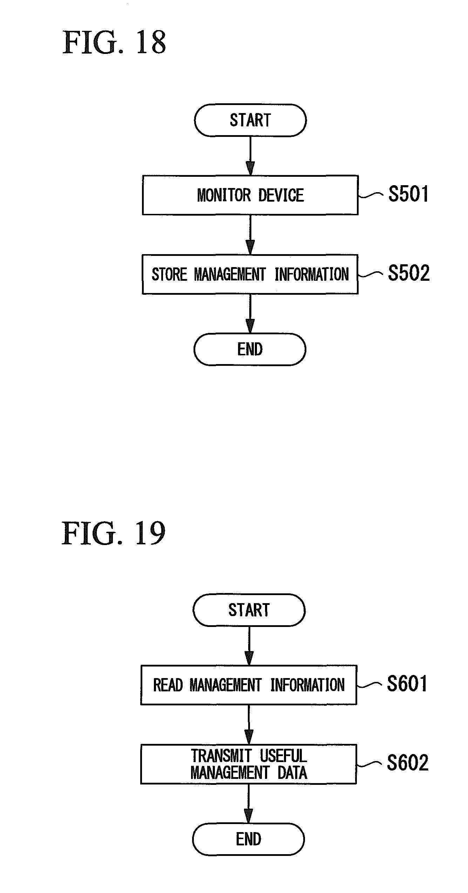

FIG. 18 is a diagram illustrating another example of the operation flow of the device controller 110. This operation flow shows an operation of monitoring devices disposed in a charging infrastructure 200. This operation flow will be described below with additional reference to FIGS. 1 to 17.

The device monitoring unit 125 of the device controller 110 normally monitors the operation statuses of the devices disposed in the charging infrastructure 200 (S501). The device monitoring unit 125 stores information useful for management of the charging infrastructure 200 acquired by monitoring the devices in the management information storage unit 130 (S502). Examples of the information useful for management of the charging infrastructure 200 include utilization statuses of parking spaces 201 of the charging infrastructure 200, operation statuses on whether the devices operate normally, sales of the charging infrastructure 200, and power consumption of the charging infrastructure 200. In this way, the information illustrated in FIG. 10 is stored in the management information storage unit 130.

FIG. 19 is a diagram illustrating still another example of the operation flow of the device controller 110. This operation flow shows an operation of providing information useful for management of a charging infrastructure 200. This operation flow will be described below with additional reference to FIGS. 1 to 18.

The manager of the charging infrastructure 200 can be provided with the information useful for management of the charging infrastructure 200 as described with reference to the operation flow illustrated in FIG 18. In being provided with the information, the manager requests to provide the information by accessing a web site for providing information useful for management of the charging infrastructures 200 using the manager device 190. The useful management data transmitting unit 126 of the device controller 110 reads the necessary information from the charger information storage unit 129 or the management information storage unit 130 in response to the request for providing information (S601), and transmits data indicating the read information to the manager device 190.

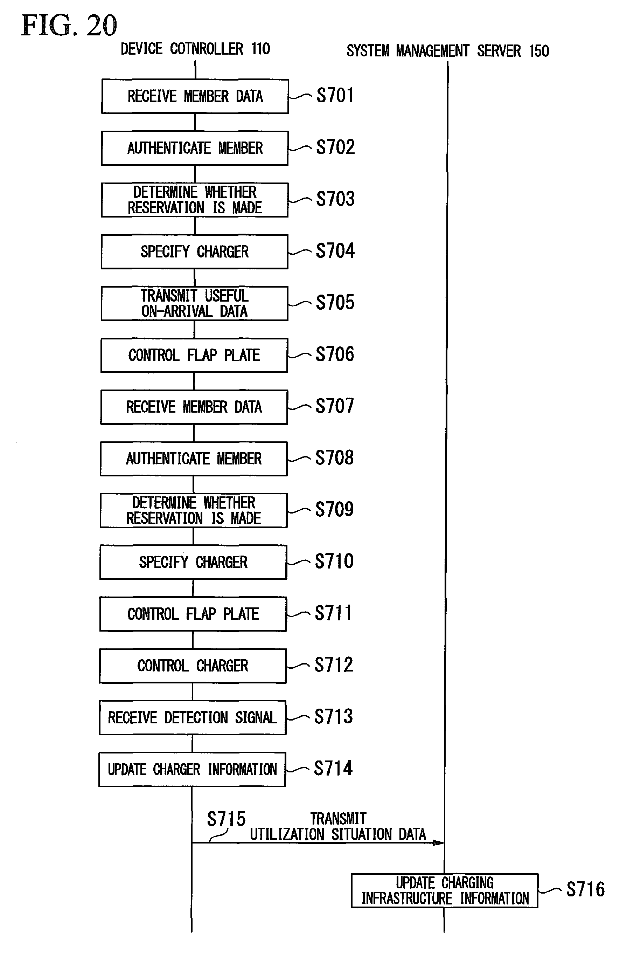

FIG. 20 is a diagram illustrating still another example of the operation sequence of the device controller 110 and the system management server 150. This operation sequence shows an operation when a member enters a charging infrastructure 200. This operation sequence will be described below with additional reference to FIGS. 1 to 19.

In the description of this operation flow, the charging infrastructure 200 has the same configuration as illustrated in FIG 2. That is, in the charging infrastructure 200 of this example, chargers 210 for charging an electric vehicle are disposed in some parking spaces 201 of a large parking lot.

The DSRC road-side wireless device 220a transmits data including information for guidance of the charging infrastructure 200 into the communication area Ca by DSRC. For example, the DSRC road-side wireless device 220a transmits data including information such as locations or availability statuses of the charging spaces 201 a to 201c, a welcome message for entry to the charging infrastructure 200, and advertisement of commercial facilities such as a department store installed together with the charging infrastructure 200 as the information for guidance of the charging infrastructure 200. The transmitted data is received by a DSRC onboard device of an electric vehicle entering the communication area Ca of the DSRC road-side wireless device 220a. The DSRC onboard device outputs information included in the received data so as to be displayed on a touch screen in the vehicle. In this way, passengers of the electric vehicle can easily understand the locations of the parking spaces 201 provided with the chargers 210 or availability status of the parking spaces 201 and can acquire advertisement of relevant businesses of the charging infrastructure 200 such as a department store or an electronics retail store.

The DSRC road-side wireless device 220b normally transmits data indicating a request for transmitting a member ID and a password into the communication area Cb by DSRC.

When an electric vehicle enters the communication area Cb of the DSRC road-side wireless device 220b, the DSRC onboard device of the electric vehicle receives the data transmitted from the DSRC road-side wireless device 220b. The DSRC onboard device transmits the data indicating a member ID and a password recorded in the DSRC onboard device to the DSRC road-side wireless device 220b in response to the request indicated by the received data.

When the data transmitted from the DSRC onboard device is received, the DSRC road-side wireless device 220b transmits the received data to the device controller 110.

When the data transmitted from the DSRC road-side wireless device 220b is received (S701), the member data receiving unit 113 of the device controller 110 sends the received data to the member authenticating unit 114.

When the data indicating the member ID and the password is received from the member data receiving unit 113, the member authenticating unit 114 of the device controller 110 authenticates the member on the basis of the member ID and the password indicated by the received data and the information stored in the member information storage unit 128 (S702). When the member is authenticated to be a right member, the member authenticating unit 114 transmits data indicating the member ID of the authenticated member to the reservation confirming unit 115 and the charger specifying unit 116.

When the data indicating the member ID is received from the member authenticating unit 114, the reservation confirming unit 115 of the device controller 110 confirms whether the member of the member ID has reserved a charger 210 depending on whether the member ID indicated by the data received from the member authenticating unit 114 is present in the information of members who have reserved the charger stored in the charger information storage unit 129 or whether the time is in the reserved time zone stored in the charger information storage unit 129 (S703). The reservation confirming unit 115 transmits data indicating the confirmation result to the charger specifying unit 116.

The charger specifying unit 116 of the device controller 110 receives the data indicating the member ID from the member authenticating unit 114. When the data indicating the confirmation result on whether the member reserves a charger 210 is received from the reservation confirming unit 115, the charger specifying unit 116 specifies a charger to be utilized by the use of the member ID indicated by the data received from the member authenticating unit 114 (S704). For example, when the confirmation result indicated by the data received from the reservation confirming unit 115 shows that the member reserves a charger 210, the charger specifying unit 116 specifies a charger 210 indicated by the charger ID correlated with the member ID indicated by the data received from the member authenticating unit 114 as a charger to be utilized by the member with reference to the information of the member who has reserved the charger stored in the charger information storage unit 129. When the confirmation result indicated by the data received from the reservation confirming unit 115 shows that the member has not reserved a charger 210, the charger specifying unit 116 specifies as a charger to be utilized by the member an empty charger 210 for exclusive use of members or a charger 210 for use of unspecified users when all the chargers 210 for exclusive use of members are in use, with reference to information of the patterns of operation and the utilization statuses stored in the charger information storage unit 129. The charger specifying unit 116 transmits data indicating the charger ID to the useful on-arrival data transmitting unit 117 and the entry regulating device control unit 118.

When the data indicating the charger ID is received from the charger specifying unit 116, the useful on-arrival data transmitting unit 117 of the device controller 110 transmits the received data to the DSRC road-side wireless device 220b (S705).

When the data indicating the charger ID is received from the device controller 110, the DSRC road-side wireless device 220b transmits data including information for guidance to the parking space 201 provided with the charger 210 of the charger ID indicated by the received data into the communication area Cb by DSRC. When the data transmitted from the DSRC road-side wireless device 220b is received, the DSRC onboard device of the electric vehicle in the communication area Cb outputs the data to a touch screen connected to the DSRC onboard device so as to display guidance information to the parking space 201 indicated by the received data. In this way, a member can easily understand the location of the parking space 201 provided with the charger 210 to be utilized regardless of the reservation.

On the other hand, when the data indicating the charger ID is received from the charger specifying unit 116, the entry regulating device control unit 118 of the device controller 110 transmits a control signal for controlling the flap plate 250 so as to fall to the flap plate 250 disposed in the parking space 201 along with the charger 210 of the charger ID indicated by the data received from the charger specifying unit 116 (S706).

When the control signal transmitted from the device controller 110 is received, the flap plate 250 comes into the fallen state from the standing state and deregulates the entry of a vehicle into the parking space 201.

On the other hand, the member drives the electric vehicle into the guided parking space 201. Then, the member brings an IC card into contact with the IC card reader 240 in order to authenticate himself again.

The IC card reader 240 reads the member ID and the password recorded on the IC card when coming in contact with the IC card. The IC card reader 240 transmits data indicating the read member ID and password to the device controller 110.

When the data transmitted from the IC card is received (S707), the member data receiving unit 113 of the device controller 110 sends the received data to the member authenticating unit 114. Thereafter, the member authenticating unit 114 authenticates the member through the same process as in step S702 (S708). Then, the member authenticating unit 114 sends the data indicating the member ID of the authenticated member to the reservation confirming unit 115.

When the data indicating the member ID is received from the member authenticating unit 114, the reservation confirming unit 115 of the device controller 110 confirms whether the member reserves a charger 210 through the same process as in step S703 (S709). Then, the reservation confirming unit 115 sends data indicating the confirmation result to the charger specifying unit 116.

When the data indicating the confirmation result on whether the member has reserved a charger 210 is received from the reservation confirming unit 115, the charger specifying unit 116 of the device controller 110 specifies a charger to be utilized by the member through the same process as in step S704 (S710). The charger specifying unit 116 sends data indicating the charger ID of the specified charger to the entry regulating device control unit 118 and the charger control unit 119.

When the data indicating the charger ID is received from the charger specifying unit 116, the entry regulating device control unit 118 of the device controller 110 transmits a control signal for controlling the flap plate 250 from the standing state to the fallen state to the flap plate 250 installed in the parking space 201 along with the charger 210 of the charger ID indicated by the data received from the charger specifying unit 116 (S711).

When the control signal transmitted from the device controller 110 is received, the flap plate 250 comes into the fallen state from the standing state and deregulates the entry of a vehicle into the parking space 201. In this example, the flap plate 250 is already in the fallen state and deregulates the entry of a vehicle into the parking space 201. Therefore, in this example, the flap plate 250 is not changed even when the control signal is received in the process of step S711. For example, when a DSRC onboard device is not mounted on the vehicle, the device controller 110 does not perform the processes of steps S701 to S706. In this case, the flap plate 250 receives the control signal in the process of step S711, comes into the fallen state from the standing state, and deregulates the entry of a vehicle into the parking space 201.

When the data indicating the charger ID is received from the charger specifying unit 116, the charger control unit 119 of the device controller 110 transmits a control signal for starting a charging operation to the charger 210 of the charger ID indicated by the data received from the charger specifying unit 116 (S712).

When the control signal transmitted from the device controller 110 is received, the charger 210 is changed to a state where a charging operation can be started. When a user parks an electric vehicle in the parking space 201, the user connects a power supply interface of the charger to the electric vehicle and starts the charging operation. When the power supply interface is once connected to the electric vehicle, the power supply interface is locked and is not separated until the utilization fee of the charging infrastructure 200 is settled.

On the other hand, when the vehicle enters the parking space 201, the sensor 260 detects the vehicle and transmits a detection signal indicating that a vehicle is detected to the device controller 110.

When the detection signal transmitted from the sensor 260 is received (S713), the detection signal receiving unit 120 of the device controller 110 stores a current time as a utilization start time in correlation with the information of the charger ID of the charger 210 disposed in the same parking space 201 as the sensor 260 from among the information stored in the charger information storage unit 129, and sets the information of the utilization status to an in-use state.

When the information stored in the charger information storage unit 129 of the device controller 110 is updated in this way (S714), the utilization status data transmitting unit 121 transmits data indicating the newest availability status of the charging infrastructure 200 to the system management server 150 (S715).

When the data transmitted from the device controller 110 is received, the utilization status data receiving unit 154 of the system management server 150 reflects the availability status information indicated by the received data in the charging infrastructure information storage unit 162 (S716). In this way, the system management server 150 can always manage the newest availability status information of each charging infrastructure 200.

When a charger 210 is set for use of unspecified users, the charger is set to a usable state without performing the processes of steps S701 to S712.

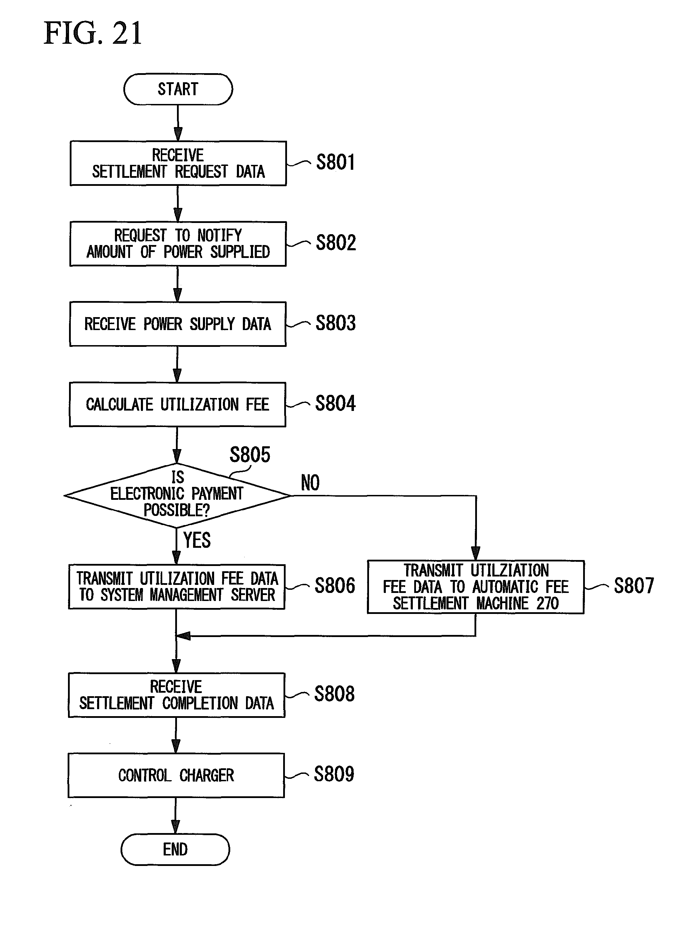

FIG. 21 is a diagram illustrating still another example of the operation flow of the device controller 110. This operation flow shows an operation of a settlement process. This operation flow will be described below with additional reference to FIGS. 1 to 20.

When a user of a charging infrastructure 200 wants to calculate the utilization fee of the charging infrastructure 200, the user presses a payment start switch of an automatic fee settlement machine 270. When the payment start switch is pressed, the automatic fee settlement machine 270 transmits data indicating a request for settlement of a utilization fee to the device controller 110.

When the data transmitted from the automatic fee settlement machine 270 is received (S801), the settlement data receiving unit 122 of the device controller 110 sends the received data to the charger control unit 119 and the utilization fee calculating unit 123.

When the data indicating a request for settlement of the utilization fee is received from the settlement data receiving unit 122, the charger control unit 119 transmits data indicating a request for notifying an amount of power supplied to the electric vehicle to the charger 210 to be settled (S802).

When the data indicating the request for notifying an amount of power supplied to the electric vehicle is received from the device controller 110, the charger 210 transmits the data indicating the amount of power supplied to the electric vehicle to the device controller 110 in response to the request indicated by the received data.

When the data transmitted from the charger 210 is received (S803), the settlement data receiving unit 122 of the device controller 110 sends the received data to the utilization fee calculating unit 123.

When the data indicating the request for settlement of the utilization fee is received from the settlement data receiving unit 122, the utilization fee calculating unit 123 of the device controller 110 reads information of the utilization start time stored in correlation with the charger ID of the charger 210 to be settled from among the information stored in the charger information storage unit 129. The utilization fee calculating unit 123 calculates the elapsed time from the read utilization start time to the current time. The utilization fee calculating unit 123 reads information of a time unit price (yen/h) corresponding to the time zone of the current time from among the information stored in the unit price information storage unit 127. The utilization fee calculating unit 123 calculates a fee, which is obtained by multiplying the read time unit price (yen/h) by the elapsed time, as the parking fee corresponding to the parking time in the charging infrastructure 200. Then, when the data indicating the amount of power supplied to the electric vehicle is received from the settlement data receiving unit 122, the utilization fee calculating unit 123 reads information of a charging unit price (yen/kWh) corresponding to the time zone of the current time from among the information stored in the unit price information storage unit 127. The utilization fee calculating unit 123 calculates a fee, which is obtained by multiplying the amount of power supplied to the electric vehicle by the read charging unit price (yen/kWh), as the charging fee. The utilization fee calculating unit 123 calculates a fee, which is obtained by adding the parking fee, the charging fee, and a predetermined basic fee, as the utilization fee of the charging infrastructure 200 (S804). The utilization fee calculating unit 123 sends data indicating the calculated utilization fee to the utilization fee data transmitting unit 124.

When the data indicating the utilization fee is received from the utilization fee calculating unit 123 and the member to be settled can make electronic payment with reference to the member information storage unit 128 (YES in S805), the utilization fee data transmitting unit 124 of the device controller 110 transmits the data indicating the utilization fee to the system management server 150 (S806).

When the data transmitted from the device controller 110 is received, the utilization fee data receiving unit 155 of the system management server 150 sends the received data to the electronic payment processing unit 156.

When the data indicating the utilization fee is received from the utilization fee data receiving unit 155, the electronic payment processing unit 156 of the system management server 150 makes electronic payment of the utilization fee with a target credit card company server 170 on the basis of the information such as the name of the member to be closely examined, the credit card company, and the credit card number from among the information stored in the member information storage unit 161. When the electronic payment process is completed and the utilization fee is settled, the electronic payment processing unit 156 sends data indicating that the utilization fee is settled to the settlement data transmitting unit 157.

When the data indicating that the utilization fee is settled is received from the electronic payment processing unit 156, the settlement data transmitting unit 157 of the system management server 150 transmits the received data to the device controller 110 which is a transmission source of the data indicating the utilization fee.

When the data transmitted from the system management server 150 is received (S808), the settlement data receiving unit 122 of the device controller 110 sends the received data to the charger control unit 119.

When the data indicating that the utilization fee is settled is received from the settlement data receiving unit 122, the charger control unit 119 of the device controller 110 controls the target charger 210 so as to unlock the power supply interface thereof.

In this way, the user can separate the power supply interface of the charger 210 from the electric vehicle and can make an exit.

When the member who tends to settle the utilization fee cannot make electronic payment in step S805 (NO in S805), the utilization fee data transmitting unit 124 transmits the data indicating the utilization fee to the automatic fee settlement machine 270 (S807).

When the data indicating the utilization fee of the charging infrastructure 200 is received from the device controller 110, the automatic fee settlement machine 270 waits until the same amount of money as the utilization fee is input from the input port. When the same amount of money as the utilization fee is input from the input port, the automatic fee settlement machine 270 transmits data indicating that the utilization fee is settled to the device controller 110 (S808).

Thereafter, when the data transmitted from the automatic fee settlement machine 270 is received, the device controller 110 performs the processes of steps S808 and S809.

As described above, the charging infrastructure management system 100 can manage charging infrastructures 200 having various patterns of operation provided with various charging-infrastructure devices other than the chargers 210. For example, the charging infrastructure management system 100 can manage a charging infrastructure 200 used by specified users and a charging infrastructure 200 used by unspecified users.

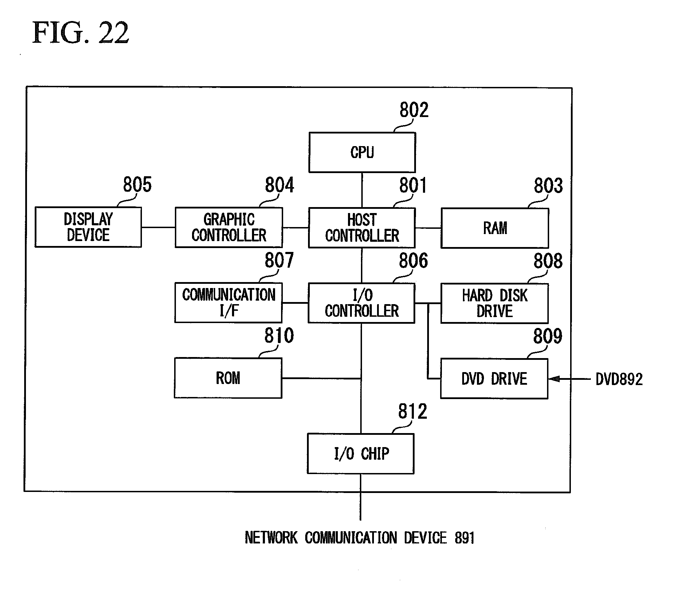

FIG. 22 is a diagram illustrating an example of a hardware configuration when the device controller 110 and the system management server 150 are each constructed as an electronic information processing device such as a computer. The device controller 110 and the system management server 150 each includes a CPU (Central Processing Unit) and peripheral unit, an input and output unit, and a legacy input and output unit. The CPU and peripheral unit includes a CPU 802, a RAM (Random Access Memory) 803, a graphic controller 804, and a display device 805 which are connected to each other via a host controller 801. The input and output unit includes a communication interface 807 connected to the host controller 801 via an input and output controller 806, a hard disk drive 808, and a DVD (Digital Versatile Disk) drive 809. The legacy input and output unit includes a ROM (Read Only Memory) 810 and an input and output chip 812 connected to the input and output controller 806.

The host controller 801 connects the RAM 803, the CPU 802 accessing the RAM 803 at a high transmission rate, and a graphic controller 804 to each other. The CPU 802 operates in accordance with programs stored in the ROM 810 and the RAM 803 to control the respective constituent units. The graphic controller 804 acquires image data generated on a frame buffer disposed in the RAM 803 by the CPU 802 or the like and displays the acquired image data on the display device 805. Instead, the graphic controller 804 may have a frame buffer, which stores the image data generated by the CPU 802 or the like, therein.

The input and output controller 806 connects the host controller 801 to the hard disk drive 808 which is a relatively high-speed input and output device, the communication interface 807, and the DVD drive 809. The hard disk drive 808 stores the programs used by the CPU 802 and the data. The communication interface 807 accesses a network communication device 891 and transmits and receives the programs or data thereto and therefrom. The DVD drive 809 reads the programs or data from a DVD 892 and provides the read programs or data to the hard disk drive 808 and the communication interface 807 via the RAM 803.

The input and output controller 806 is connected to the ROM 810 and a relatively low-speed input and output device of the input and output chip 812. The ROM 810 stores booting programs which are executed at the time of startup of the device controller 110 and the system management server 150, programs depending on the hardware of the device controller 110 and the system management server 150, or the like. The input and output chip 812 connects various input and output devices via a parallel port, a serial port, a keyboard port, a mouse port, and the like.

The programs executed by the CPU 802 are recorded on a recording medium such as a DVD 892 or an IC (Integrated Circuit) card and are provided by a user. The programs stored in the recording medium may be compressed or non-compressed. The programs are installed in the hard disk drive 808 from the recording medium, are read to the RAM 803, and are executed by the CPU 802. The programs executed by the CPU 802 make the device controller 110 serve as the charger setting receiving unit 111, the member registration data receiving unit 112, the member data receiving unit 113, the member authenticating unit 114, the reservation confirming unit 115, the charger specifying unit 116, the useful on-arrival data transmitting unit 117, the entry regulating device control unit 118, the charger control unit 119, the detection signal receiving unit 120, the utilization status data transmitting unit 121, the settlement data receiving unit 122, the utilization fee calculating unit 123, the utilization fee data transmitting unit 124, the device monitoring unit 125, the useful management data transmitting unit 126, the unit price information storage unit 127, the member information storage unit 128, the charger information storage unit 129, and the management information storage unit 130, which are described with reference to FIGS. 1 to 21 and make the system management server 150 serve as the member registration receiving unit 151, the reservation registration receiving unit 152, the member registration data transmitting unit 153, the utilization status data receiving unit 154, the utilization fee data receiving unit 155, the electronic payment processing unit 156, the settlement data transmitting unit 157, the useful before-arrival data transmission request receiving unit 158, the reachable charging infrastructure specifying unit 159, the useful before-arrival data transmitting unit 160, the member information storage unit 161, and the charging infrastructure information storage unit 162, which are described with reference to FIGS. 1 to 21.

The above-mentioned program may be stored in an external storage medium. In addition to the DVD 892, an optical recording medium such as a PD (Phase Disk), a magneto-optical recording medium such as an MD (Mini Disk), a tape medium, a semiconductor memory such as an IC card, and the like can be used as the storage medium. The program may be provided as a program via a network using a storage medium such as a hard disk or a RAM installed in a server system connected to an exclusive communication network or the Internet as a recording medium.

While the present invention is described in conjunction with the embodiments, the technical scope of the present invention is not limited to the scope described in the embodiments. It will be apparently understood by those skilled in the art that the embodiments can be changed or modified in various forms. It can be apparently seen from the description of the appended claims that the changes or modifications belong to the technical scope of the present invention.

### Industrial Applicability

The charging infrastructure management system according to the present invention is a charging infrastructure management system managing a charging infrastructure for an electric vehicle, and includes a charger control unit that controls a charger so as to change the behavior thereof at the time of charging the electric vehicle depending on a pattern of operation of the charging infrastructure determined by a combination of the charger for charging the electric vehicle with various charging-infrastructure devices other than the charger.

The charging infrastructure management system according to the present invention can manage charging infrastructures having various patterns of operation provided with various charging-infrastructure devices in addition to chargers for charging an electric vehicle. For example, the charging infrastructure management system according to the present invention can manage both a charging infrastructure used by specified users and a charging infrastructure used by unspecified users.

### Reference Signs List

- 100:: CHARGING INFRASTRUCTURE MANAGEMENT SYSTEM
- 110:: DEVICE CONTROLLER
- 111:: CHARGER SETTING RECEIVING UNIT
- 112:: MEMBER REGISTRATION DATA RECEIVING UNIT
- 113:: MEMBER DATA RECEIVING UNIT
- 114:: MEMBER AUTHENTICATING UNIT
- 115:: RESERVATION CONFIRMING UNIT
- 116:: CHARGER SPECIFYING UNIT
- 117:: USEFUL ON-ARRIVAL DATA TRANSMITTING UNIT
- 118:: ENTRY REGULATING DEVICE CONTROL UNIT
- 119:: CHARGER CONTROL UNIT
- 120:: DETECTION SIGNAL RECEIVING UNIT
- 121:: UTILIZATION STATUS DATA TRANSMITTING UNIT
- 122:: SETTLEMENT DATA RECEIVING UNIT
- 123:: UTILIZATION FEE CALCULATING UNIT
- 124:: UTILIZATION FEE DATA TRANSMITTING UNIT
- 125:: DEVICE MONITORING UNIT
- 126:: MANGEMENT USEFUL DATA TRANSMITTING UNIT
- 127:: UNIT PRICE INFORMATION STORAGE UNIT
- 128:: MEMBER INFORMATION STORAGE UNIT
- 129:: CHARGER INFORMATION STORAGE UNIT
- 130:: MANAGEMENT INFORMATION STORAGE UNIT
- 150:: SYSTEM MANAGEMENT SERVER
- 151:: MEMBER REGISTRATION RECEIVING UNIT
- 152:: RESERVATION REGISTRATION RECEIVING UNIT
- 153:: MEMBER REGISTRATION DATA TRANSMITTING UNIT
- 154:: UTILIZATION STATUS DATA RECEIVING UNIT
- 155:: UTILIZATION FEE DATA RECEIVING UNIT
- 156:: ELECTRONIC PAYMENT PROCESSING UNIT
- 157:: SETTLEMENT DATA TRANSMITTING UNIT
- 158:: USEFUL BEFORE-ARRIVAL DATA TRANSMITTION REQUEST RECEIVING UNIT
- 159:: REACHABLE CHARGING INFRASTRUCTURE IDENTYFYING UNIT
- 160:: USEFUL BEFORE-ARRIVAL DATA TRANSMITTING UNIT
- 161:: MEMBER INFORMATION STORAGE UNIT
- 162:: CHARGING INFRASTRUCTURE INFORMATION STORAGE UNIT
- 170:: SERVER OF CREDIT COMPANY
- 180:: UESER DEVICE
- 190:: MANAGER DEVICE
- 200:: CHARGING INFRASTRUCTURE
- 201:: PARKING SPACE
- 202:: ENTRANCE
- 210:: CHARGER
- 220:: DSRC ROAD-SIDE COMMUNICATION DEVICE
- 240:: IC CARD READER
- 250:: FLAP PLATE
- 260:: SENSOR
- 270:: AUTOMATIC FEE SETTLEMENT MACHINE
- 801:: HOST CONTROLLER
- 802:: CPU
- 803:: RAM
- 804:: GRAPHIC CONTROLLER
- 805:: DISPLAY DEVICE
- 806:: INPUT AND OUTPUT CONTROLLER
- 807:: COMMUNICATION INTERFACE
- 808:: HARD DISK DRIVE
- 809:: DVD DRIVE
- 810:: ROM
- 812:: INPUT AND OUTPUT CHIP
- 891:: NETWORK COMMUNICATION DEVICE
- 892:: DVD
- C:: COMMUNICATION AREA
- I:: COMMUNICATION NETWORK

## Claims

1. A charging infrastructure management system managing a charging infrastructure for an electric vehicle, comprising:
a charger control unit configured to control a charger for charging the electric vehicle so as to change the behavior of the charger at the time of charging the electric vehicle depending on a pattern of operation of the charging infrastructure determined by a combination of the charger with various charging-infrastructure devices other than the charger.

2. The charging infrastructure management system according to claim 1, further comprising:
a member authenticating unit configured to authenticate a member on the basis of member data read by a member data reader when the charging infrastructure is under a pattern of operation in which the member data reader for reading the member data from a storage device storing member data of the charging infrastructure is included as the charging-infrastructure device,
wherein the charger control unit controls an operation of the charger so as to start a charging operation after the member authenticating unit authenticates the member.

3. The charging infrastructure management system according to claim 2, further comprising:
a reservation confirming unit configured to confirm whether the member authenticated by the member authenticating unit has reserved the charger,
wherein the charger control unit controls the operation of the charger so as to start the charging operation when the reservation confirming unit determines that the member is a member who has reserved the charger.

4. The charging infrastructure management system according to claim 3, further comprising:
a charger specifying unit configured to specifies a charger to be used by a member authenticated by the member authenticating unit from among a plurality of the chargers; and
an entry regulating device control unit configured to control the operation of an entry regulating device so as to release the regulation of entry of the electric vehicle into the parking space having the charger, which is specified by the charger specifying unit, installed therein when the charging infrastructure is under a pattern of operation in which the entry regulating device for regulating entry of an electric vehicle into a parking space having the charger installed therein is included as the charging-infrastructure device.

5. The charging infrastructure management system according to claim 4, wherein the charger specifying unit specifies a charger to be used by the member when the reservation confirming unit confirms that the member is a member who has reserved the charger.

6. The charging infrastructure management system according to claim 4 or 5, wherein the charger specifying unit specifies a charger to be used by the member when the reservation confirming unit confirms that the member is not a member who has reserved the charger.

7. The charging infrastructure management system according to any one of claims 4 to 6, further comprising:
a useful on-arrival data transmitting unit configured to transmit useful on-arrival data including information useful on arrival at the charging infrastructure to an onboard device of the electric vehicle via a wireless transmitter when the charging infrastructure is under a pattern of operation in which the wireless transmitter for transmitting data to the onboard device in a wireless manner is included as the charging-infrastructure device.

8. The charging infrastructure management system according to claim 7, wherein the useful on-arrival data transmitting unit transmits useful on-arrival data including information indicating guidance to the charger specified by the charger specifying unit as the information useful on arrival at the charging infrastructure to the onboard device via the wireless transmitter.

9. The charging infrastructure management system according to claim 7 or 8, wherein the useful on-arrival data transmitting unit transmits useful on-arrival data including information indicating an advertisement of a business relevant to the charging infrastructure as the information useful on arrival at the charging infrastructure to the onboard device via the wireless transmitter.

10. The charging infrastructure management system according to any one of claims 1 to 9, further comprising:
a useful before-arrival data transmitting unit configured to transmit useful before-arrival data including information useful before arrival at the charging infrastructure to an onboard device of the electric vehicle via a communication network.

11. The charging infrastructure management system according to claim 10,
wherein the useful before-arrival data transmitting unit transmits useful before-arrival data including information indicating the location of the charging infrastructure as the information useful before arrival at the charging infrastructure to the onboard device of the electric vehicle via the communication network.

12. The charging infrastructure management system according to claim 10 or 11,
wherein the useful before-arrival data transmitting unit transmits useful before-arrival data including information indicating a utilization status of the charger as the information useful before arrival at the charging infrastructure to the onboard device of the electric vehicle via the communication network.

13. The charging infrastructure management system according to any one of claims 10 to 12,
wherein the useful before-arrival data transmitting unit transmits useful before-arrival data including information indicating a reservation status of the charger as the information useful before arrival at the charging infrastructure to the onboard device of the electric vehicle via the communication network.

14. The charging infrastructure management system according to any one of claims 10 to 13, further comprising:
a reachable charging infrastructure specifying unit configured to specify a charging infrastructure reachable by the electric vehicle from among a plurality of the charging infrastructures on the basis of position information of the electric vehicle, information of remaining charging capacity of a rechargeable battery of the electric vehicle, and position information of the plurality of charging infrastructures,
wherein the useful before-arrival data transmitting unit transmits useful before-arrival data including information indicating the location of the charging infrastructure specified by the reachable charging infrastructure specifying unit as the information useful before arrival at the charging infrastructure to the onboard device of the electric vehicle via the communication network.

15. The charging infrastructure management system according to any one of claims 1 to 14, further comprising:
a utilization fee calculating unit configured to calculate a utilization fee of the charging infrastructure including at least a charging fee when the charging infrastructure is under the pattern of operation in which an automatic fee settlement machine for settling the utilization fee of the charging infrastructure is included as the charging-infrastructure device and when the automatic fee settlement machine in addition to the charger is selected as the charging-infrastructure devices,
wherein the charger control unit controls the operation of the charger so as to separate a power supply interface connected to the electric vehicle after the utilization fee calculated by the utilization fee calculating unit is settled by the automatic fee settlement machine.

16. The charging infrastructure management system according to claim 15, wherein the utilization fee calculating unit calculates the utilization fee of the charging infrastructure further including a parking fee depending on a parking time in the charging infrastructure.

17. The charging infrastructure management system according to claim 15 or 16,
wherein the utilization fee calculating unit calculates the utilization fee depending on a time zone.

18. The charging infrastructure management system according to any one of claims 15 to 17, further comprising:
an electronic payment processing unit configured to make electronic payment of the utilization fee calculated by the utilization fee calculating unit when a member authenticated by the member authenticating unit registers electronic payment in advance,
wherein the charger control unit controls the operation of the charger so as to separate a power supply interface connected to the electric vehicle after the electronic payment is made by the electronic payment processing unit.

19. The charging infrastructure management system according to any one of claims 1 to 18, further comprising:
a useful management data transmitting unit configured to transmit useful management data including information useful for management of the charging infrastructure to a manager device used by a manager of the charging infrastructure via a communication network.

20. The charging infrastructure management system according to claim 19,
wherein the useful management data transmitting unit transmits useful management data including information indicating a utilization status of the charging infrastructure as the information useful for management of the charging infrastructure to the manager device via the communication network.

21. The charging infrastructure management system according to claim 19 or 20,
wherein the useful management data transmitting unit transmits useful management data including information indicating an operation status of the charging-infrastructure device as the information useful for management of the charging infrastructure to the manager device via the communication network.

22. The charging infrastructure management system according to any one of claims 19 to 21,
wherein the useful management data transmitting unit transmits useful management data including information indicating sales of the charging infrastructure as the information useful for management of the charging infrastructure to the manager device via the communication network.

23. The charging infrastructure management system according to any one of claims 19 to 22,
wherein the useful management data transmitting unit transmits useful management data including information indicating power consumption of the charging infrastructure as the information useful for management of the charging infrastructure to the manager device via the communication network.

24. The charging infrastructure management system according to any one of claims 1 to 23, further comprising:
a charger setting receiving unit configured to receive a setting for the operation of the charger from the manager of the charging infrastructure.

25. The charging infrastructure management system according to claim 24,
wherein the charger setting receiving unit receives a setting on whether the charger should be made to operate from the manager of the charging infrastructure.

26. The charging infrastructure management system according to claim 24 or 25,
wherein the charger setting receiving unit receives a setting on whether the charger should be made to operate for exclusive use of members from the manager of the charging infrastructure.

27. The charging infrastructure management system according to any one of claims 24 to 26,
wherein the charger setting receiving unit receives a setting on whether the charger should be made to operate for exclusive use of members who have reserved the charger from the manager of the charging infrastructure.

28. A control method of controlling a charging infrastructure management system managing a charging infrastructure for an electric vehicle, the method comprising:
a charger control step of controlling a charger so as to change the behavior thereof at the time of charging the electric vehicle depending on a pattern of operation of the charging infrastructure determined by a combination of the charger for charging the electric vehicle with various charging-infrastructure devices other than the charger.

29. A program for a charging infrastructure management system managing a charging infrastructure for an electric vehicle, making the charging infrastructure management system serve as:
a charger control unit configured to control a charger so as to change the behavior thereof at the time of charging the electric vehicle depending on a pattern of operation of the charging infrastructure determined by a combination of the charger for charging the electric vehicle with various charging-infrastructure devices other than the charger.
